# EUROPEAN PATENT SPECIFICATION

(11) **EP 3 912 329 B1**
(45) Date of publication and mention of the grant of the patent: **31.01.2024**
(21) Application number: 19853295.4
(22) Date of filing: 10.12.2019
(51) Int. Cl.: H04L 67/12, H04W 4/12

(54) **AUTOMATED SERVICE LAYER MESSAGE FLOW MANAGEMENT IN A COMMUNICATIONS NETWORK**
AUTOMATISIERTE DIENSTSCHICHT-NACHRICHTENFLUSSVERWALTUNG IN EINEM KOMMUNIKATIONSNETZ
GESTION AUTOMATISÉE DE FLUX DE MESSAGES DE COUCHE DE SERVICE DANS UN RÉSEAU DE COMMUNICATION

(30) Priority: 16.01.2019 US 201962793057 P
(43) Date of publication of application: 24.11.2021
(73) Proprietor: CONVIDA WIRELESS, LLC, Wilmington, DE 19809-3727 (US)
(72) Inventor: CHEN, Zhuo, Wilmington, DE 19809-3727 (US); SEED, Dale N., Wilmington, DE 19809-3727 (US); LY, Quang, Wilmington, DE 19809-3727 (US); MLADIN, Catalina Mihaela, Wilmington, DE 19809-3727 (US); LIU, Lu, Wilmington, DE 19809-3727 (US); NINGLEKHU, Jiwan L., Wilmington, DE 19809-3727 (US); FLYNN IV, William Robert, Wilmington, DE 19809-3727 (US); WANG, Chonggang, Wilmington, DE 19809-3727 (US); DL GIROLAMO, Rocco, Wilmington, DE 19809-3727 (US)
(74) Representative: D Young & Co LLP
(86) International application number: PCT/US2019/065419
(87) International publication number: WO 2020/149963

(56) References cited:
- EP-A1- 3 100 471
- ERSUE M ET AL: "Management of Networks with Constrained Devices: Problem Statement and Requirements; draft-opsawg-ersue-coman-probstate-reqs-00 .txt", MANAGEMENT OF NETWORKS WITH CONSTRAINED DEVICES: PROBLEM STATEMENT AND REQUIREMENTS; DRAFT-OPSAWG-ERSUE-COMAN-PROBSTATE-REQS-00 .TXT, INTERNET ENGINEERING TASK FORCE, IETF; STANDARDWORKINGDRAFT, INTERNET SOCIETY (ISOC) 4, RUE DES FALAISES CH- 1205 GEN, 21 October 2013 (2013-10-21), pages 1-56, XP015095741, [retrieved on 2013-10-21]
- 3GPP DRAFT; ATIS NETWORK OPTIMIZATION FOCUS GROUP (NETOP-FG) ASSESSMENT & RECOMMENDATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 8 November 2011 (2011-11-08), XP050574392, [retrieved on 2011-11-08]

## Description

### CROSS-REFERENCE TO RELATED APPLICATION

This application claims the benefit of U.S. Provisional Patent Application No. 62/793,057, filed January 16, 2019.

### BACKGROUND

A machine-to-machine (M2M) or Internet of Things (IoT) service layer (SL) is a technology specifically targeted towards providing value-added services for M2M/IoT devices, IoT applications and IoT data. Recently, several industry standard bodies, such as oneM2M, the European Telecommunications Standards Institute (ETSI), the Open Connectivity Foundation (OCF) and the Open Mobile Alliance (OMA) Lightweight M2M (LWM2M) group, have been developing M2M/IoT SLs to address the challenges associated with the integration of M2M/IoT devices, applications and data into deployments with the Internet/Web, cellular, enterprise, and home network.

An M2M/IoT SL can provide applications and devices access to a collection of M2M/IoT oriented capabilities. A few examples include security, charging, data management, device management, discovery, provisioning, and connectivity management. These capabilities are made available to applications via APIs which make use of message formats, resource structures and resource representations supported by the M2M/IoT SL.

From a protocol stack perspective, SLs are typically situated above the application protocol layer and provide value added services to applications they support. Hence SLs are often categorized as 'middleware' services. From a deployment perspective, an M2M/IoT SL can be deployed on various types of network nodes including servers, gateways and devices.

The oneM2M standards body has defined a M2M/IoT SL. The purpose of this SL is to provide "horizontal" services that can be utilized by different "vertical" M2M systems and applications, such as e-health, fleet management, and smart homes.

Non-patent document "Management of Networks with Constrained Devices: Problem Statement and Requirements" (Ersue et al) provides a problem statement, deployment and management topology options as well as the requirements for the management of networks where constrained devices are involved.

### SUMMARY

The invention is defined by independent claims 1, 10 and 15, relating to an apparatus, a method and a computer-readable storage medium, respectively, for implementing a service layer entity of a communications network. Preferred embodiments of the invention are set out in the dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

A more detailed understanding may be had from the following description, given by way of example in conjunction with accompanying drawings wherein:
Fig. 1A is a system diagram of an example machine-to-machine (M2M), Internet of Things (IoT), or Web of Things (WoT) communication system in which one or more disclosed embodiments may be implemented;
Fig. 1B is a system diagram of an example architecture that may be used within the M2M/IoT/WoT communications system illustrated in Fig. 1A;
Fig. 1C is a system diagram of an example communication network apparatus, such as an M2M/IoT/WoT device, gateway, or server that may be used within the communications system illustrated in Figs. 1A and 1B;
Fig. 1D is a block diagram of an example computing system in which a node or apparatus of the communication system of Figs. 1A and 1B may be embodied;
Fig. 2A illustrates an example protocol stack supporting a service layer;
Fig. 2B illustrates an example machine-to-machine (M2M)/Intemet of Things (IoT) service layer (SL) deployed on various types of network nodes;
Fig. 3 is a block diagram illustrating the architecture of an example communications network implemented in accordance with the oneM2M standard specification;
Fig. 4 is a block diagram illustrating a plurality of Common Service Functions in accordance with the oneM2M standard specification;
Fig. 5 illustrates a number of configurations supported by the architecture of the oneM2M standard specification;
Fig. 6 illustrates an example use case;
Fig. 7 illustrates an example architecture for a message flow management service;
Fig. 8 illustrates a client function of the message flow management service;
Fig. 9 illustrates a method for service layer message flow management;
Fig. 10 is a flow diagram illustrating one example of end-to-end reactive service layer message flow management;
Figs. 11A and 11B together comprise a flow diagram illustrating a method for hop-by-hop reactive service layer message flow management without message flow management discovery;
Figs. 12A and 12B together comprise a flow diagram illustrating a method for hop-by-hop reactive service layer message flow management with message flow management discovery;
Figs. 13A and 13B together comprise a flow diagram illustrating a method for proactive service layer message flow management;
Figs. 14A and 14B together comprise a flow diagram illustrating a method for automated service layer message flow management deactivation;
Fig. 15 illustrates a Common Services Entity (CSE) comprising a message flow management Common Services Function (CSF);
Fig. 16 is a flow diagram illustrating a method for reactive message flow management in a oneM2M network implementation;
Fig. 17 is a flow diagram illustrating a method for proactive message flow management in a oneM2M network implementation; and
Fig. 18 illustrates an example graphical user interface for M2M/IoT servers and/or gateways to display aspects of the message flow management illustrated and described herein.

### DETAILED DESCRIPTION

The following is a list of acronyms relating to service layer technologies that may appear in the following description. Unless otherwise specified, the acronyms used herein refer to the corresponding term listed below:
- ADN: application Dedicated Node
- AE: application Entity
- API: application Programming Interfaces
- ASN: application Service Node
- CSE: Common Service Entity
- CSF: Common Service Function
- IN: Infrastructure Network
- IoT: Internet of Things
- IP: Internet Protocol
- M2M: Machine to Machine
- MFM: Message Flow Management
- MN: Middle Node
- NoDN: Non-oneM2M Node
- PoA: Point of Access
- ROA: Resource Oriented Architecture
- SL: Service Layer
- TE: Target Entity
- URI: Uniform Resource Identifier

The following terms may have the following meanings:

An IoT application may comprise a software entity that performs application specific functionality pertaining to Internet of Things (IoT) use cases, such as sensing, monitoring, actuating or the like.

An IoT service may comprise a software entity that provides capabilities for IoT applications and devices, such as data management, security, device management, and the like.

An IoT device may comprise an entity that can host one or more IoT applications. An IoT device may also contain IoT services.

An IoT entity may comprise an IoT application, IoT service or IoT device.

An IoT service platform may comprise a system that provides IoT services to enrollees of the platform and their IoT devices, applications, data and users on behalf of a service provider.

An IoT service provider may be any stakeholder, such as a company, individual, corporation, or other organization, responsible for the deployment and management of an IoT service platform.

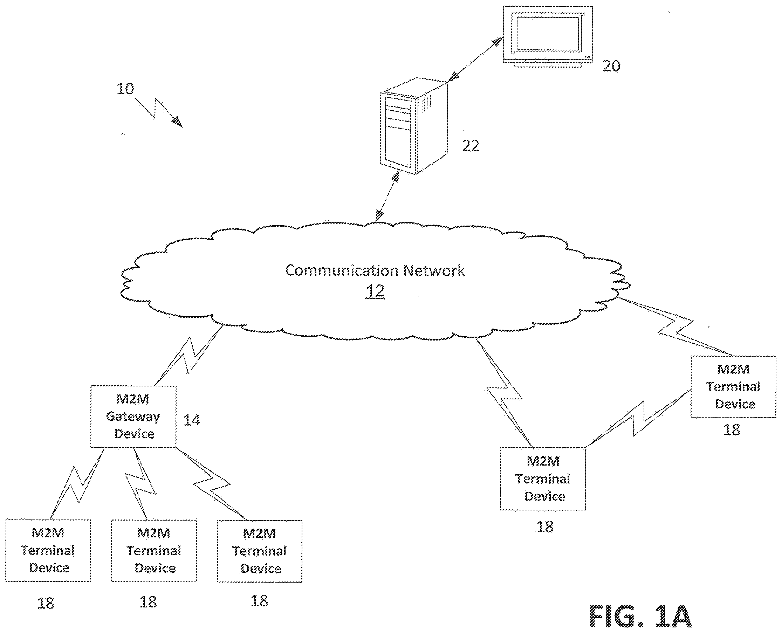

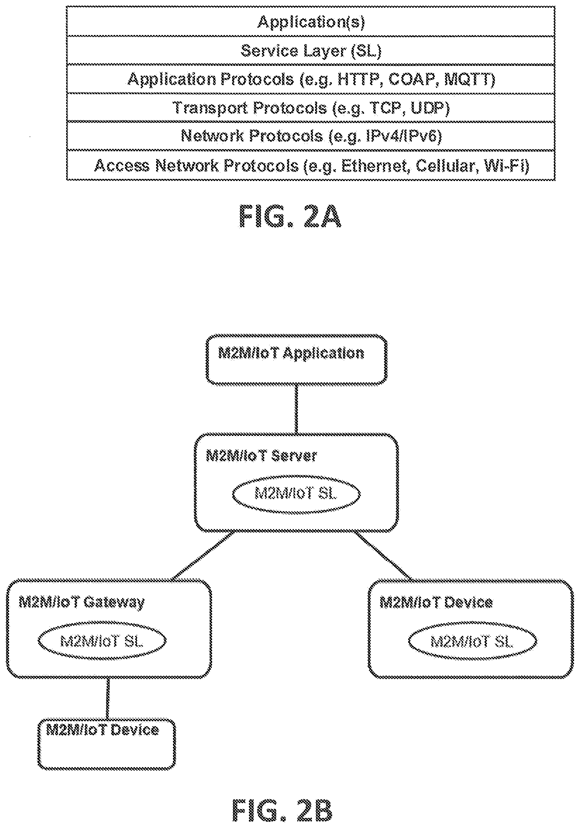

Fig. 1A is a diagram of an example machine-to machine (M2M), Internet of Things (IoT), or Web of Things (WoT) communication system 10 in which one or more disclosed embodiments may be implemented. Generally, M2M technologies provide building blocks for the IoT/WoT, and any M2M device, M2M gateway, M2M server, or M2M service platform may be a component or apparatus of the IoT/WoT as well as an IoT/WoT Service Layer, etc. Any of the entities illustrated in any of Figs. 2B and 3-17 may comprise a network apparatus of a communication system, such as the ones illustrated in Figs. 1A-D.

The service layer may be a functional layer within a network service architecture. Service layers are typically situated above the application protocol layer such as HTTP, CoAP or MQTT and provide value added services to client applications. The service layer also provides an interface to core networks at a lower resource layer, such as for example, a control layer and transport/access layer. The service layer supports multiple categories of (service) capabilities or functionalities including a service definition, service runtime enablement, policy management, access control, and service clustering. Recently, several industry standards bodies, e.g., oneM2M, have been developing M2M service layers to address the challenges associated with the integration of M2M types of devices and applications into deployments such as the Internet/Web, cellular, enterprise, and home networks. A M2M service layer may provide applications and/or various devices with access to a collection of or a set of the above-mentioned capabilities or functionalities, supported by the service layer, which may be referred to as a CSE or SCL. A few examples include but are not limited to security, charging, data management, device management, discovery, provisioning, and connectivity management which may be commonly used by various applications. These capabilities or functionalities are made available to such various applications via APIs which make use of message formats, resource structures and resource representations defined by the M2M service layer. The CSE or SCL is a functional entity that may be implemented by hardware and/or software and that provides (service) capabilities or functionalities exposed to various applications and/or devices (i.e., functional interfaces between such functional entities) in order for them to use such capabilities or functionalities.

As shown in Fig. 1A, the M2M/ IoT/WoT communication system 10 includes a communication network 12. The communication network 12 may be a fixed network (e.g., Ethernet, Fiber, ISDN, PLC, or the like) or a wireless network (e.g., WLAN, cellular, or the like) or a network of heterogeneous networks. For example, the communication network 12 may be comprised of multiple access networks that provide content such as voice, data, video, messaging, broadcast, or the like to multiple users. For example, the communication network 12 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like. Further, the communication network 12 may comprise other networks such as a core network, the Internet, a sensor network, an industrial control network, a personal area network, a fused personal network, a satellite network, a home network, or an enterprise network for example.

As shown in Fig. 1A, the M2M/ IoT/WoT communication system 10 may include the Infrastructure Domain and the Field Domain. The Infrastructure Domain refers to the network side of the end-to-end M2M deployment, and the Field Domain refers to the area networks, usually behind an M2M gateway. The Field Domain and Infrastructure Domain may both comprise a variety of different network apparatuses (e.g., servers, gateways, device, and the like) of the network. For example, the Field Domain may include M2M gateways 14 and devices 18. It will be appreciated that any number of M2M gateway devices 14 and M2M devices 18 may be included in the M2M/ IoT/WoT communication system 10 as desired. Each of the M2M gateway devices 14 and M2M devices 18 are configured to transmit and receive signals, using communications circuitry, via the communication network 12 or direct radio link.

A M2M gateway 14 allows wireless M2M devices (e.g., cellular and non-cellular) as well as fixed network M2M devices (e.g., PLC) to communicate either through operator networks, such as the communication network 12 or direct radio link. For example, the M2M devices 18 may collect data and send the data, via the communication network 12 or direct radio link, to an M2M application 20 or other M2M devices 18. The M2M devices 18 may also receive data from the M2M application 20 or an M2M device 18. Further, data and signals may be sent to and received from the M2M application 20 via an M2M Service Layer 22, as described below. M2M devices 18 and gateways 14 may communicate via various networks including, cellular, WLAN, WPAN (e.g., Zigbee, 6LoWPAN, Bluetooth), direct radio link, and wireline for example. Exemplary M2M devices include, but are not limited to, tablets, smart phones, medical devices, temperature and weather monitors, connected cars, smart meters, game consoles, personal digital assistants, health and fitness monitors, lights, thermostats, appliances, garage doors and other actuator-based devices, security devices, and smart outlets.

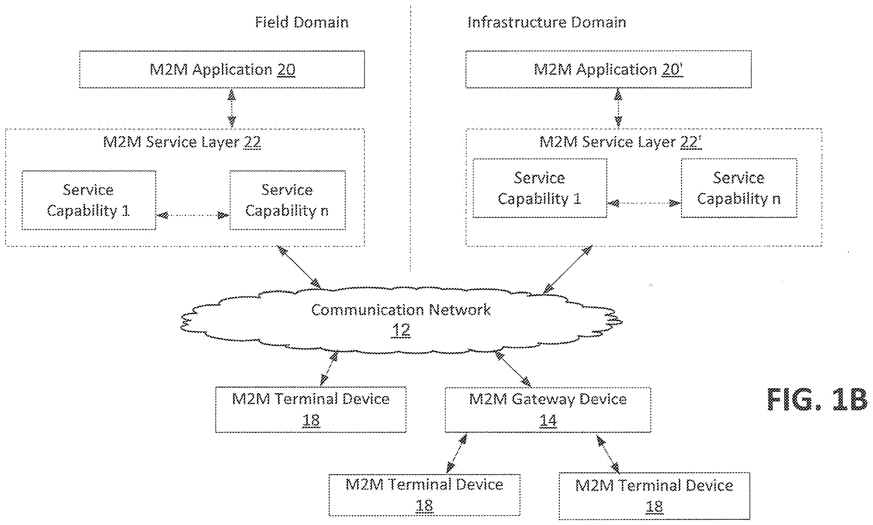

Referring to Fig. 1B, the illustrated M2M Service Layer 22 in the field domain provides services for the M2M application 20, M2M gateways 14, and M2M devices 18 and the communication network 12. It will be understood that the M2M Service Layer 22 may communicate with any number of M2M applications, M2M gateways 14, M2M devices 18, and communication networks 12 as desired. The M2M Service Layer 22 may be implemented by one or more network apparatuses of the network, which may comprise servers, computers, devices, or the like. The M2M Service Layer 22 provides service capabilities that apply to M2M devices 18, M2M gateways 14, and M2M applications 20. The functions of the M2M Service Layer 22 may be implemented in a variety of ways, for example as a web server, in the cellular core network, in the cloud, etc.

Similar to the illustrated M2M Service Layer 22, there is the M2M Service Layer 22' in the Infrastructure Domain. M2M Service Layer 22' provides services for the M2M application 20' and the underlying communication network 12 in the infrastructure domain. M2M Service Layer 22' also provides services for the M2M gateways 14 and M2M devices 18 in the field domain. It will be understood that the M2M Service Layer 22' may communicate with any number of M2M applications, M2M gateways and M2M devices. The M2M Service Layer 22' may interact with a Service Layer by a different service provider. The M2M Service Layer 22' may be implemented by one or more network apparatuses of the network, which may comprise servers, computers, devices, virtual machines (e.g., cloud computing/storage farms, etc.) or the like.

Referring also to Fig. 1B, the M2M Service Layers 22 and 22' provide a core set of service delivery capabilities that diverse applications and verticals may leverage. These service capabilities enable M2M applications 20 and 20' to interact with devices and perform functions such as data collection, data analysis, device management, security, billing, service/device discovery, etc. Essentially, these service capabilities free the applications of the burden of implementing these functionalities, thus simplifying application development and reducing cost and time to market. The Service Layers 22 and 22' also enable M2M applications 20 and 20' to communicate through various networks such as network 12 in connection with the services that the Service Layers 22 and 22' provide.

The M2M applications 20 and 20' may include applications in various industries such as, without limitation, transportation, health and wellness, connected home, energy management, asset tracking, and security and surveillance. As mentioned above, the M2M Service Layer, running across the devices, gateways, servers and other network apparatuses of the system, supports functions such as, for example, data collection, device management, security, billing, location tracking/geofencing, device/service discovery, and legacy systems integration, and provides these functions as services to the M2M applications 20 and 20'.

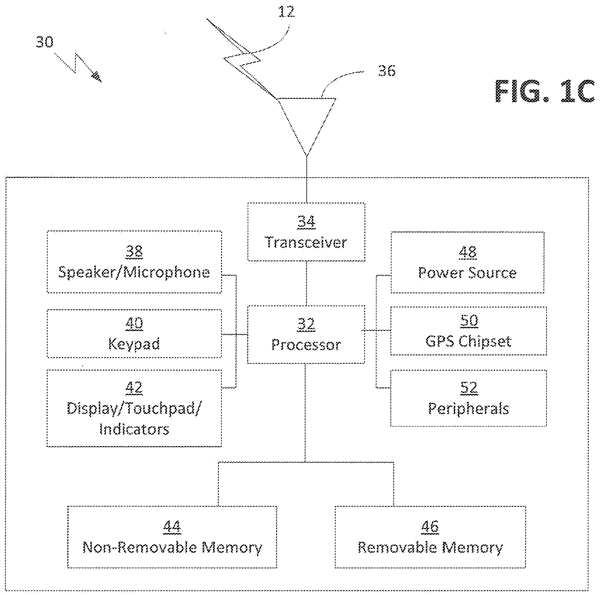

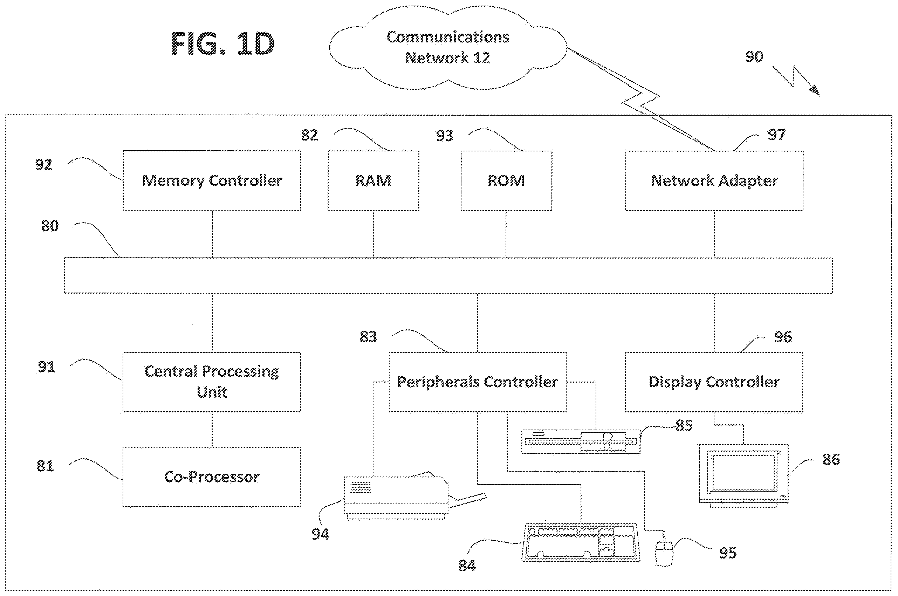

Generally, a Service Layer, such as the Service Layers 22 and 22' illustrated in Fig. 1B, defines a software middleware layer that supports value-added service capabilities through a set of application Programming Interfaces (APIs) and underlying networking interfaces. Both the ETSI M2M and oneM2M architectures define a Service Layer. ETSI M2M's Service Layer is referred to as the Service Capability Layer (SCL). The SCL may be implemented in a variety of different nodes of the ETSI M2M architecture. For example, an instance of the Service Layer may be implemented within an M2M device (where it is referred to as a device SCL (DSCL)), a gateway (where it is referred to as a gateway SCL (GSCL)) and/or a network node (where it is referred to as a network SCL (NSCL)). The oneM2M Service Layer supports a set of Common Service Functions (CSFs) (i.e., service capabilities). An instantiation of a set of one or more particular types of CSFs is referred to as a Common Services Entity (CSE) which may be hosted on different types of network nodes (e.g., infrastructure node, middle node, application-specific node). The Third Generation Partnership Project (3GPP) has also defined an architecture for machine-type communications (MTC). In that architecture, the Service Layer, and the service capabilities it provides, are implemented as part of a Service Capability Server (SCS). Whether embodied in a DSCL, GSCL, or NSCL of the ETSI M2M architecture, in a Service Capability Server (SCS) of the 3GPP MTC architecture, in a CSF or CSE of the oneM2M architecture, or in some other node of a network, an instance of the Service Layer may be implemented as a logical entity (e.g., software, computer-executable instructions, and the like) executing either on one or more standalone nodes in the network, including servers, computers, and other computing devices or nodes, or as part of one or more existing nodes. As an example, an instance of a Service Layer or component thereof may be implemented in the form of software running on a network apparatus (e.g., server, computer, gateway, device or the like) having the general architecture illustrated in Fig. 1C or Fig. 1D described below.

Further, the methods and functionalities described herein may be implemented as part of an M2M network that uses a Service Oriented Architecture (SOA) and/or a Resource-Oriented Architecture (ROA) to access services.

Fig. 1C is a block diagram of an example hardware/software architecture of an apparatus of a network, such as one of the entities illustrated in Figs. 2B and 3-17, which may operate as an M2M server, gateway, device, or other network apparatus in an M2M network such as that illustrated in Figs. 1A and 1B. As shown in Fig. 1C, the network apparatus 30 may include a processor 32, non-removable memory 44, removable memory 46, a speaker/microphone 38, a keypad 40, a display, touchpad, and/or indicators 42, a power source 48, a global positioning system (GPS) chipset 50, and other peripherals 52. The network apparatus 30 may also include communication circuitry, such as a transceiver 34 and a transmit/receive element 36. It will be appreciated that the network apparatus 30 may include any sub-combination of the foregoing elements while remaining consistent with an embodiment. This network apparatus may be an apparatus that implements the message template management capabilities and methods described herein, such as the methods operations illustrated and described in relation to Figs. 2B and 3-17.

The processor 32 may be a general purpose processor, a special purpose processor, a conventional processor, a digital signal processor (DSP), a plurality of microprocessors, one or more microprocessors in association with a DSP core, a controller, a microcontroller, application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., memory 44 and/or memory 46) of the network apparatus in order to perform the various required functions of the network apparatus. For example, the processor 32 may perform signal coding, data processing, power control, input/output processing, and/or any other functionality that enables the network apparatus 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

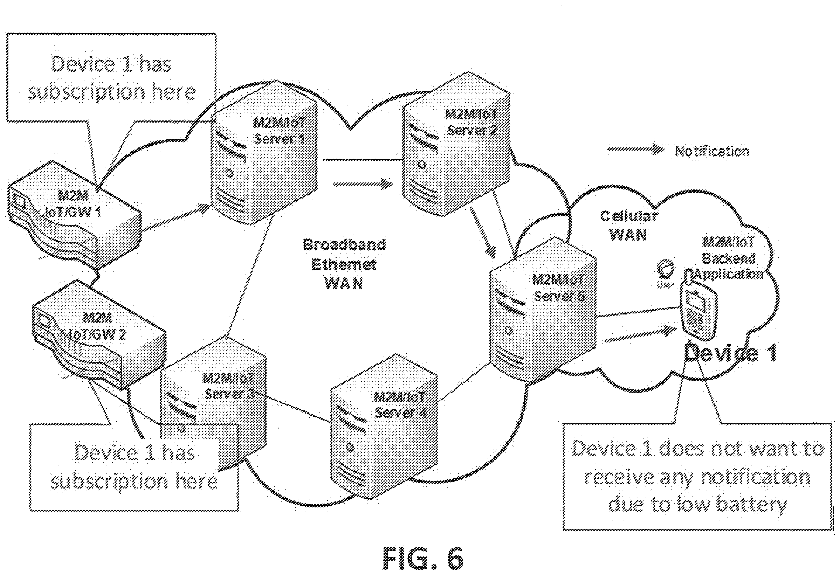

As shown in Fig. 1C, the processor 32 is coupled to its communication circuitry (e.g., transceiver 34 and transmit/receive element 36). The processor 32, through the execution of computer executable instructions, may control the communication circuitry in order to cause the network apparatus 30 to communicate with other network apparatuses via the network to which it is connected. In particular, the processor 32 may control the communication circuitry in order to perform the transmitting and receiving steps described herein (e.g., in Figs. 6-17) and in the claims. While Fig. 1C depicts the processor 32 and the transceiver 34 as separate components, it will be appreciated that the processor 32 and the transceiver 34 may be integrated together in an electronic package or chip.

The transmit/receive element 36 may be configured to transmit signals to, or receive signals from, other network apparatuses, including M2M servers, gateways, device, and the like. For example, in an embodiment, the transmit/receive element 36 may be an antenna configured to transmit and/or receive RF signals. The transmit/receive element 36 may support various networks and air interfaces, such as WLAN, WPAN, cellular, and the like. In an embodiment, the transmit/receive element 36 may be an emitter/detector configured to transmit and/or receive IR, UV, or visible light signals, for example. In yet another embodiment, the transmit/receive element 36 may be configured to transmit and receive both RF and light signals. It will be appreciated that the transmit/receive element 36 may be configured to transmit and/or receive any combination of wireless or wired signals.

In addition, although the transmit/receive element 36 is depicted in Fig. 1C as a single element, the network apparatus 30 may include any number of transmit/receive elements 36. More specifically, the network apparatus 30 may employ MIMO technology. Thus, in an embodiment, the network apparatus 30 may include two or more transmit/receive elements 36 (e.g., multiple antennas) for transmitting and receiving wireless signals.

The transceiver 34 may be configured to modulate the signals that are to be transmitted by the transmit/receive element 36 and to demodulate the signals that are received by the transmit/receive element 36. As noted above, the network apparatus 30 may have multi-mode capabilities. Thus, the transceiver 34 may include multiple transceivers for enabling the network apparatus 30 to communicate via multiple RATs, such as UTRA and IEEE 802.11, for example.

The processor 32 may access information from, and store data in, any type of suitable memory, such as the non-removable memory 44 and/or the removable memory 46. For example, the processor 32 may store session context in its memory, as described above. The non-removable memory 44 may include random-access memory (RAM), read-only memory (ROM), a hard disk, or any other type of memory storage device. The removable memory 46 may include a subscriber identity module (SIM) card, a memory stick, a secure digital (SD) memory card, and the like. In other embodiments, the processor 32 may access information from, and store data in, memory that is not physically located on the network apparatus 30, such as on a server or a home computer. The processor 32 may be configured to control lighting patterns, images, or colors on the display or indicators 42 to reflect the status of an apparatus or configure an apparatus, and in particular underlying networks, applications, or other services in communication with the network apparatus. In one embodiment, the display/indicators 42 may present the graphical user interface illustrated in Fig. 31 and described herein.

The processor 32 may receive power from the power source 48, and may be configured to distribute and/or control the power to the other components in the network apparatus 30. The power source 48 may be any suitable device for powering the network apparatus 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 32 may also be coupled to the GPS chipset 50, which is configured to provide location information (e.g., longitude and latitude) regarding the current location of the network apparatus 30. It will be appreciated that the network apparatus 30 may acquire location information by way of any suitable location-determination method while remaining consistent with an embodiment.

The processor 32 may further be coupled to other peripherals 52, which may include one or more software and/or hardware modules that provide additional features, functionality and/or wired or wireless connectivity. For example, the peripherals 52 may include various sensors such as an accelerometer, biometrics (e.g., fingerprint) sensors, an e-compass, a satellite transceiver, a sensor, a digital camera (for photographs or video), a universal serial bus (USB) port or other interconnect interfaces, a vibration device, a television transceiver, a hands free headset, a Bluetooth^{®} module, a frequency modulated (FM) radio unit, a digital music player, a media player, a video game player module, an Internet browser, and the like.

The network apparatus 30 may be embodied in other apparatuses or devices, such as a sensor, consumer electronics, a wearable device such as a smart watch or smart clothing, a medical or eHealth device, a robot, industrial equipment, a drone, a vehicle such as a car, truck, train, or airplane. The network apparatus 30 may connect to other components, modules, or systems of such apparatuses or devices via one or more interconnect interfaces, such as an interconnect interface that may comprise one of the peripherals 52.

Fig. 1D is a block diagram of an exemplary computing system 90 which may also be used to implement one or more network apparatuses of a network, such as the entities illustrated in Figs. 2B and 3-17, and described herein, which may operate as an M2M server, gateway, device, or other network apparatus in an M2M network such as that illustrated in Figs. 1A and 1B.

Computing system 90 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 90 to do work. In many known workstations, servers, and personal computers, central processing unit 91 is implemented by a single-chip CPU called a microprocessor. In other machines, the central processing unit 91 may comprise multiple processors. Coprocessor 81 is an optional processor, distinct from main CPU 91, that performs additional functions or assists CPU 91. CPU 91 and/or coprocessor 81 may receive, generate, and process data related to the disclosed systems and methods for E2E M2M Service Layer sessions, such as receiving session credentials or authenticating based on session credentials.

In operation, CPU 91 fetches, decodes, and executes instructions, and transfers information to and from other resources via the computer's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 90 may contain peripherals controller 83 responsible for communicating instructions from CPU 91 to peripherals, such as printer 94, keyboard 84, mouse 95, and disk drive 85.

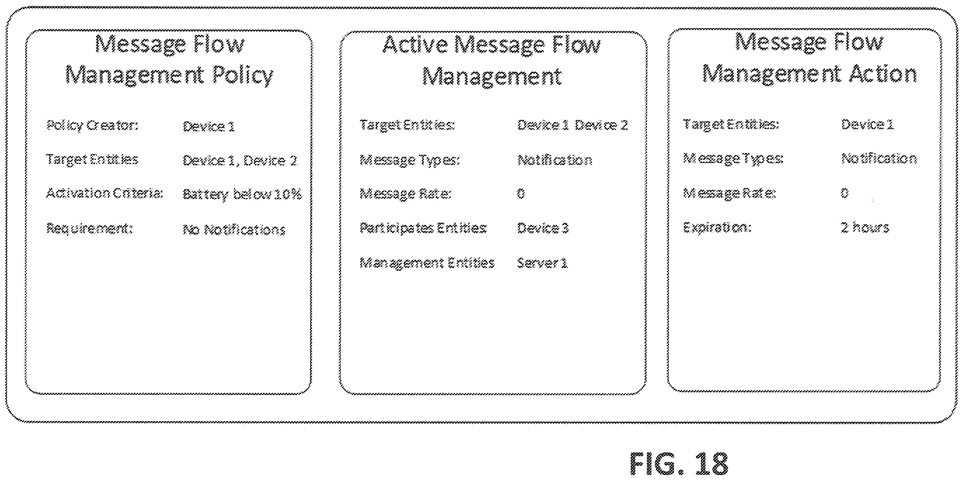

Display 86, which is controlled by display controller 96, is used to display visual output generated by computing system 90. Such visual output may include text, graphics, animated graphics, and video. Display 86 may be implemented with a CRT-based video display, an LCD-based flat-panel display, gas plasma-based flat-panel display, or a touch-panel. Display controller 96 includes electronic components required to generate a video signal that is sent to display 86. Display 86, in combination with the computer-executable instructions executed by CPU 91, may generate and operate the graphical user interface illustrated and described in Fig. 18 and its accompanying description.

Further, computing system 90 may contain communication circuitry, such as for example a network adaptor 97, that may be used to connect computing system 90 to an external communications network, such as network 12 of Fig. 1A-D, to enable the computing system 90 to communicate with other apparatuses of the network. The communication circuitry, alone or in combination with the CPU 91, may be used to perform the transmitting and receiving steps described herein and in the claims.

As mentioned above, a M2M/IoT service layer (SL) is a technology specifically targeted towards providing value-added services for M2M/IoT devices, IoT applications and IoT data. Several industry standard bodies have been developing M2M/IoT SLs to address the challenges associated with the integration of M2M/IoT devices, applications and data into deployments with the Internet/Web, cellular, enterprise, and home network.

An M2M/IoT SL can provide applications and devices access to a collection of M2M/IoT oriented capabilities. A few examples include security, charging, data management, device management, discovery, provisioning, and connectivity management. These capabilities are made available to applications via APIs which make use of message formats, resource structures and resource representations supported by the M2M/IoT SL.

From a protocol stack perspective, SLs are typically situated above the application protocol layer and provide value added services to applications they support. Hence SLs are often categorized as 'middleware' services. Fig. 2A shows an exemplary service layer between the application Protocols and application(s) layers.

From a deployment perspective, an M2M/IoT SL can be deployed on various types of network nodes including servers, gateways and devices, as shown in Fig. 2B.

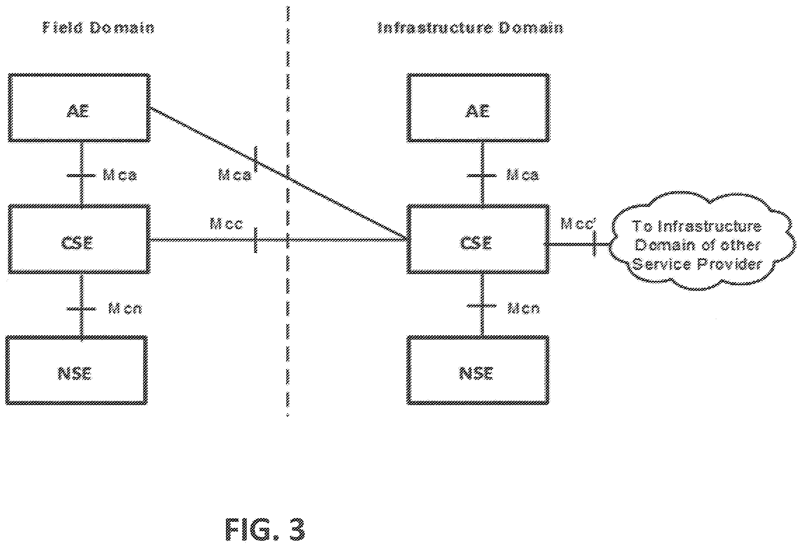

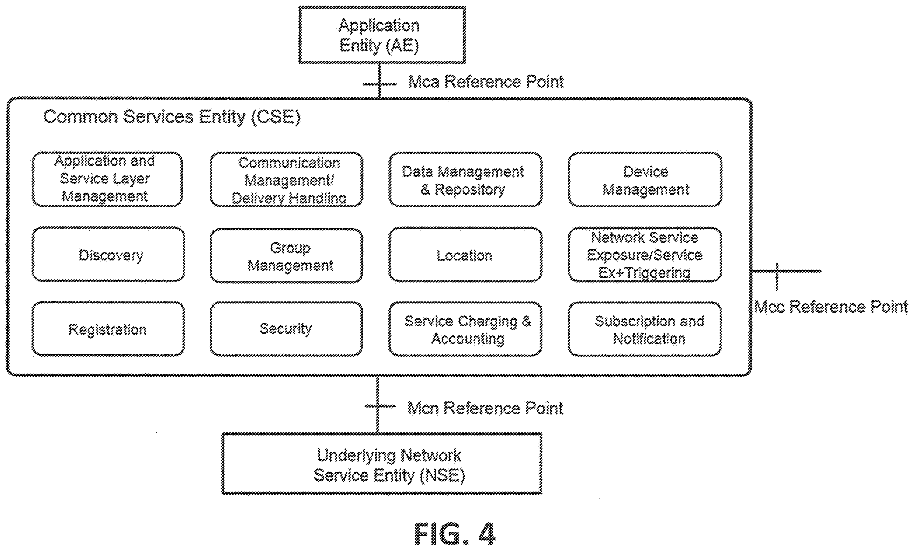

The oneM2M standards body has defined a M2M/IoT SL. The purpose of the one M2M SL is to provide "horizontal" services that can be utilized by different "vertical" M2M systems and applications, such as e-health, fleet management, and smart homes. As shown in Fig. 3, the architecture of the oneM2M SL defines a Common Service entity (CSE) that supports four reference points. The Mca reference point interfaces with the application entity (AE). The Mcc reference point interfaces with another CSE within the same service provider domain and the Mcc' reference point interfaces with another CSE in a different service provider domain. The Mcn reference point interfaces with the underlying network service entity (NSE). An NSE provides underlying network services to the CSEs, such as device management, location services and device triggering. A CSE contains multiple logical functions called "Common Service Functions (CSFs)", such as "Discovery", "Data Management & Repository". Fig. 4 illustrates the CSFs supported by oneM2M.

The oneM2M architecture is a distributed architecture and supports deploying M2M/IoT services in a distributed manner across the following types of Nodes:
application Service Node (ASN): an ASN is a Node that contains one CSE and contains at least one application entity (AE). As an example of a physical mapping, an ASN may reside in an M2M device.
application Dedicated Node (ADN): an ADN is a Node that contains at least one AE and does not contain a CSE. As an example of a physical mapping, an application Dedicated Node may reside in a constrained M2M device.

Middle Node (MN): a MN is a Node that contains one CSE and contains zero or more AEs. As an example of a physical mapping, a MN may reside in an M2M gateway.

Infrastructure Node (IN): an IN is a Node that contains one CSE and contains zero or more AEs. A CSE in an IN may contain CSE functions not applicable to other node types. As an example of a physical mapping, an IN may reside in an M2M Service Infrastructure.

Non-oneM2M Node (NoDN): a non-oneM2M Node is a Node that does not contain oneM2M entities (neither AEs nor CSEs). Such Nodes represent devices attached to the oneM2M system for interworking purposes, including management.

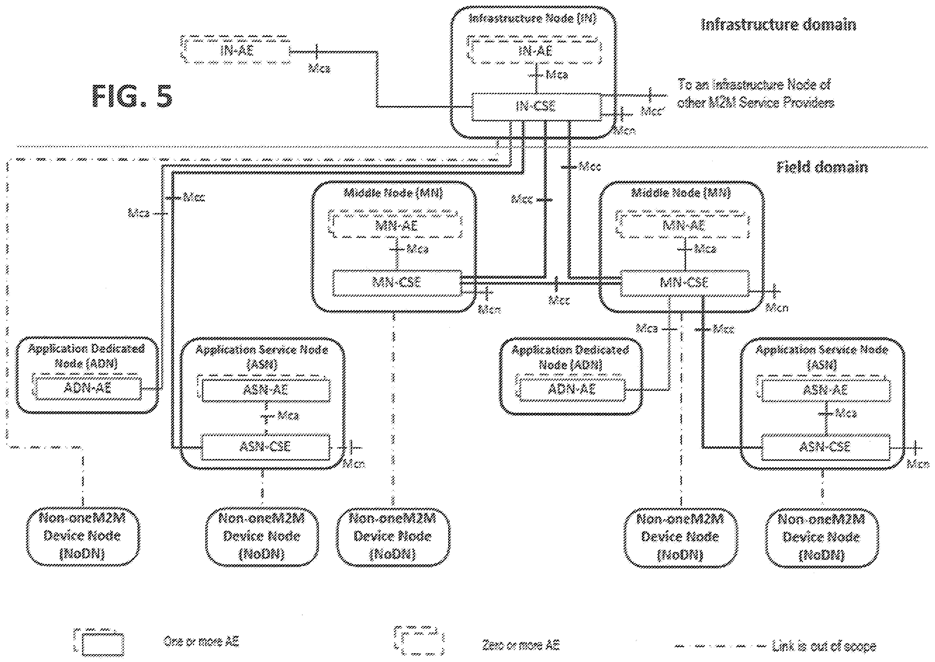

The possible configurations of inter-connecting the various entities supported within the oneM2M system are illustrated in Fig. 5.

In M2M/IoT service layer deployments, for example a oneM2M service layer deployment, a device may receive a SL message from multiple SL entities. For example, a device may publish or announce its resource to different SL entities resulting in multiple applications discovering the announced resource and sending requests to retrieve the resource on the device at any time. As another example, a device may create multiple resource subscriptions at multiple remote SL entities. These multiple SL entities may send notification messages to the device when the respective notification criteria have been met.

IoT devices may be mobile and constrained devices that are battery powered. When a device's battery is low, the device may want to reduce the number of requests it receives to help conserve its battery. As another example, when the transceiver of a device detects weak signal strength, the device may also want to reduce the number of messages it receives until signal strength improves. However, current M2M/IoT service layers do not support capabilities to dynamically control the rate of SL messages that are destined to an IoT device or application based on the status of the device. For example, if a device wants to stop receiving request messages that access its locally hosted resources, the device itself has to deannounce its resources on all SL entities to which it has previously announced its resource. As another example, to reduce the number of notification messages it receives, a device itself should delete, disable or change the rate of notifications on all SL entities to which it has subscribed, as illustrated in Fig. 6. These manual actions performed by the device itself result in extra overhead and complexity on the device which can be problematic especially for constrained devices. As another potential option, the dynamic control of the rate of SL messages could be achieved by having the target entity (TE) stop processing all incoming request messages. However, such an option would still lead to unnecessary message processing at the originators and intermediate entities in the system, as well as wasted SL message exchanges. Furthermore, the TE would not have control as to the type of messages it would like to flow control.

Described herein is a Service Layer (SL) capability, which may be referred to hereinafter as a Message Flow Management (MFM) Service, that enables dynamic control of the rate of particular SL messages that are destined to an IoT device or application, referred to herein as a target entity (TE), based on its SL status. During or after registration of the TE with the SL, the TE may configure one or more MFM policies that may define rules for the MFM Service, including the criteria for when the MFM should be activated or deactivated, the requirement that the MFM Service should achieve, such as, for example, reducing the rate of particular SL messages targeting the TE based on the type of the message, the priority of the message, the size of the message, and/or the originator of the message. Based on the one or more MFM policies, the SL entity that provides MFM Services may detect when the MFM for the TE should be activated, such as when the TE is unavailable or has limited capability to process particular SL messages. On behalf of the TE, the SL entity that provides MFM Services can cooperate with remote SL entities in the network to inform them that the MFM for the TE is activated and the actions that they need to perform to achieve the requirement defined in the MFM policies. On receiving this information, these remote SL entities in the network can perform actions such as:
- Disable the TE's subscriptions to resources hosted on these remote SL entities such that notifications may no longer be sent from the remote SL entities to the TE.
- Disable the TE's announced resources hosted on these remote SL entities such that the announced resource cannot be discovered and accessed by other SL entities. Thus, accesses to the TE resources that are linked to these announced resources may not occur.
- Filter discovery results to remove those pointing to resources of the TE such that a SL entity performing the discovery operation may not attempt to access the resources of the TE that is unavailable.
- Remove the TE from an existing group resource to avoid group fanout messages or reduce the fanout rate to the TE.
- Stop or reduce the rate of sending/forwarding of particular SL messages to the TE.

In accordance with one aspect, an automated SL message flow management architecture is disclosed herein to support automated SL message flow management that can control the rate of particular SL messages destined to a SL entity based on the type of the message, the priority of the message, the size of the message and/or the originator of the message.

In another aspect, a method is disclosed for a TE to configure a MFM Service by creating/updating/deleting MFM policies that define rules to perform the MFM Service, including the criteria for when the MFM should be activated or deactivated, the requirement that the MFM Service should achieve, such as, for example, reducing the rate of particular SL messages targeting the TE based on the type of the message, the priority of the message, the size of the message and originator of the message.

In another aspect, MFM operational methods are disclosed that may be initiated after the MFM is activated for a TE. The SL entity that provides the MFM Service for the TE may cooperate with remote SL entities in the network to achieve the requirement defined in the MFM Policies.

These MFM operational methods may comprise reactive MFM operational methods for use when the SL entity that provides the MFM Service receives a SL message that is subjected to MFM. These reactive MFM operation methods may include (1) an end-to-end reactive MFM operational method for use where the SL entity that provides the MFM Service coordinates with an originator of an SL message to achieve the requirement defined in the applicable MFM policy(ies), and (2) a hop-by-hop reactive MFM operational method for use where the SL entity that provides the MFM Service coordinates with one or more SL entities that are on the SL path of the SL message targeted to the TE to achieve the requirement defined in applicable MFM policy(ies).

The MFM operational methods may also comprise a proactive MFM operational method which may be applied before the SL entity that provides the MFM Service receives a SL message that is subjected to MFM. The SL entity that provides the MFM Service may discover and select SL entities to provide MFM services, along with itself, for the TE.

### Message Flow Management Service Architecture

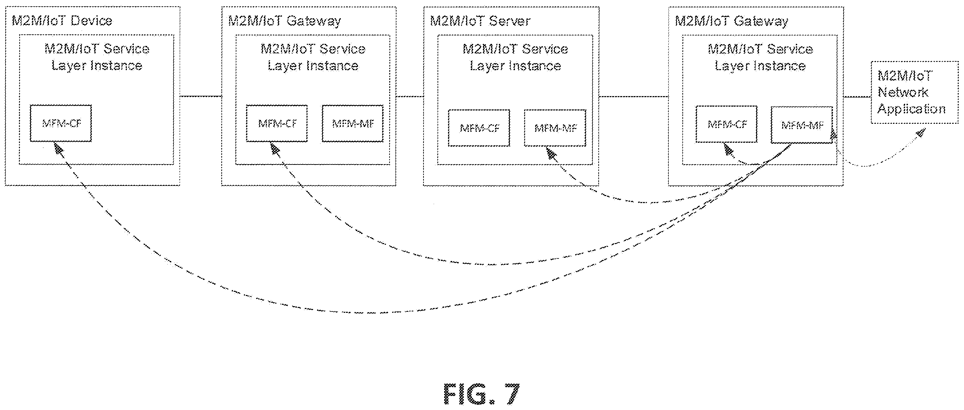

With reference to Fig. 7, an architecture for a message flow management service (MFM Service) may comprise a service layer message flow management manager function (MFM-MF) and a service layer message flow management client function (MFM-CF). Together, these two functions may operate to implement the MFM service described herein.

The MFM-MF may store MFM policies that may be created by a TE, or another SL entity on behalf of the TE. The MFM policies may define MFM triggering conditions and MFM service requirements. Based on a MFM triggering condition defined in one or more MFM policies, the MFM-MF may monitors the real-time MFM context information associated with a TE and decide whether to activate the MFM service for the TE. The MFM context information may comprise, but is not limited to, one or more of the battery power, the signal strength, and the service schedule of the TE. Additional context information may comprise network congestion or fault condition information involving the network connectivity to the TE. As one example, the MFM activation condition may be the battery power of the TE is below a threshold, the signal strength of the TE is below a threshold, the TE is not available to provide service based on its service schedule, the network connectivity to the TE is not available or congested, or a combination of these of conditions.

Alternatively, the TE may also send a request to activate the MFM service. If MFM is activated, the MFM-MF may send a MFM Action Request to the MFM-CF located on other SL entities to perform the MFM service for the TE, as also shown in Fig. 7. The MFM-MF may also send a MFM Management Request to a MFM-MF located on other SL entities to provide the MFM service for the TE. A more detailed description of these MFM operational methods is described below.

The MFM-MF may be implemented as a service. The service may either be a standalone service or implemented as a sub-service of an IoT Service Layer. The MFM-MF service may be hosted on various types of network nodes such as loT servers, IoT gateways and IoT devices.

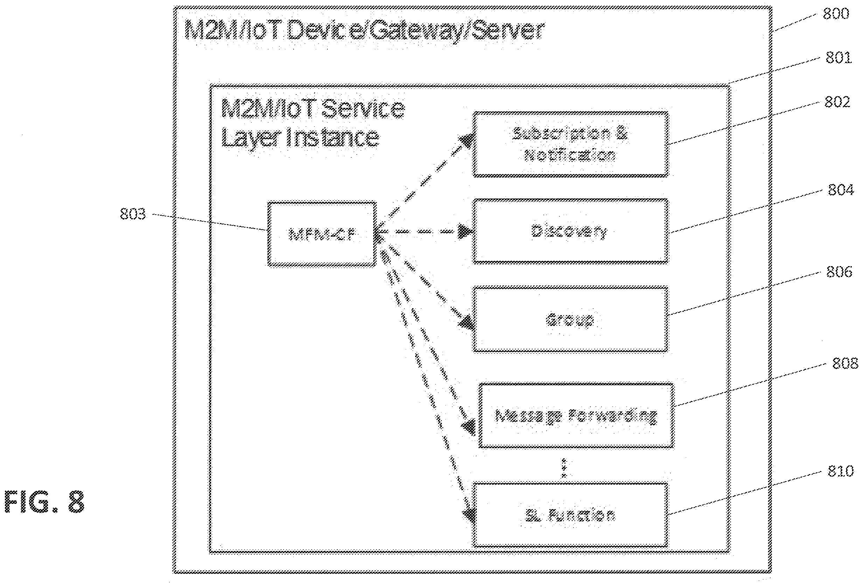

Fig. 8 illustrates an example M2M/IoT device, gateway, or server 800 that hosts an instance of an M2M/IoT service layer. Such an M2M/IoT device, gateway, or server 800 that hosts a service layer instance 801 may be referred to herein as a service layer entity. As further show in Fig. 8, the SL instance further comprises an instance of the MFM-CF 803. The MFM-CF 803 may process MFM Action Requests it receives from a MFM-MF. A MFM-CF function located on a SL entity, such as the MFM-CF function 803, may cooperate with other SL functions located on the same entity to perform MFM actions. For example, a MFM-CF may cooperate with a SL subscription and notification function 802 to decrease or even cease the rate of SL notification messages to the TE. In another example, a MFM-CF may cooperate with a SL discovery function 804 to filter out discovered resources that are associated with a particular TE such that the TE's resources are not discovered and accessed by other SL entities. In another example, a MFM-CF may cooperate with a SL group function 806 to remove the TE from an existing group resource to avoid group fanout message or reduce the fanout rate to the TE that is unavailable. In yet another example, a MFM-CF may cooperate with a SL forwarding function 808 to stop or decrease the rate of forwarding SL messages that are destined for a TE. For example, before forwarding a SL message, the SL forward function may check with the MFM-CF 803 to determine whether sending the new message exceeds a rate defined in the MFM-CF 803. Note that, as shown in Fig. 8, an MFM-CF, such as MFM-CF 803, may be hosted on various types of network nodes such as M2M/IoT servers, M2M/IoT gateways, M2M/IoT devices and M2M/IoT applications.

Although the example MFM service architecture described above and illustrated in Figs. 7 and 8 comprises the separate MFM-MF and MFM-CF functions, it is understood that this is just one possible implementation. In other implementations, the logic and functionality of the MFM-MF and MFM-CF may be divided and/or combined in other ways.

### Automated Service Layer Message Flow Management Methods

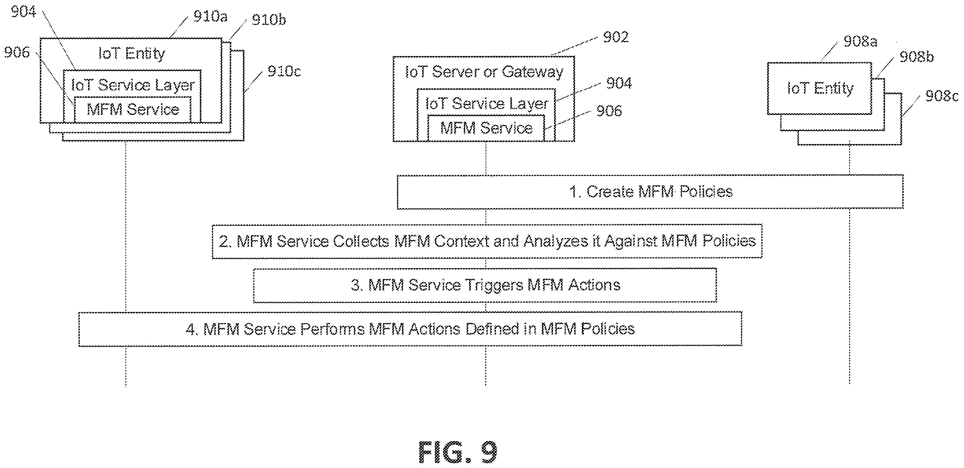

Fig. 9 provides an overview of methods for message flow management involving an IoT SL 904 that supports the MFM Service 906 disclosed herein and is hosted on an IoT server or gateway 902. In this example, the MFM Service may manage the rate of particular SL messages to IoT devices and applications that are registered to the IoT SL.

As illustrated in step 1, individual IoT entities 908a, 908b, 908c, such as TEs or other SL entities acting on behalf of TEs, may send requests to the MFM Service 906 in the SL 904 to create MFM policies containing rules that provide guidance to perform the MFM Service. For example, the TE may create a policy that when its battery power is below a threshold, it intends to stop receiving SL notification messages. As another example, the TE may create a policy that when it is not available based on its schedule, it intends to stop receiving all SL messages destined to it. Requests to create MFM policies may be issued by IoT entities 908a-c at different times, for example, when a service subscriber enrolls, or when a device, application or user performs SL registration to a SL, or sometime thereafter. This action may also be triggered by a user who is handling the IoT entity (e.g., device). For example, the user may use a GUI to configure information in the device and initiate the device sending a request to the SL requesting MFM Service.

Table 1 illustrates the contents of one example of a MFM policy. As shown, the MFM policy may comprise one or more attributes, such as MFM Context, MFM Context Monitor Method, MFM Activation Criteria, MFM Requirements, MFM Operation Method, MFM Policy Creator, and/or MFM Target Entity List. A description of each attribute is provided in Table 1. The MFM policy may be implemented using any suitable data structure, such as a table, a database record, an array, a matrix, or the like. The data structure containing the attributes of the MFM policy may be stored in a memory of the IoT entity (e.g., entities 902, 910a-c) that maintains the policy. The attributes of the policy may also be expressed in the form of a mark-up language, such as extensible mark-up language (XML) or the like. When transmitted in the form of a message or request, the attributes of the MFM policy may comprise the payload of such message or request.

**Table 1 - Message Flow Management (MFM) Policy**

| **Attribute** | **Description** | |
|---|---|---|
| MFM Context | Context information that is to be monitored by the MFM-MF for the TE. For example, the battery power of the TE, the signal strength of TE, the service schedule of the TE, and the like. | |
| MFM Context Monitor Method | An indication of a method for the MFM-MF to monitor the MFM context. For example, the MFM Service may collect the service schedule of TEs that have registered to the SL. The MFM Service may also collect MFM Context by periodically querying the state of the TEs, for example, the remaining battery power, the communication link quality of the TEs, and the like. | |
| MFM Activation Criteria | Conditions that must be met for the MFM Service to activate the MFM for the TE. For example, the battery power of the TE is below a threshold, the signal strength of TE is below a threshold, the TE is not available based on its service schedule, and the like. Alternatively, the MFM Activation Criteria may be set to "Explicit", indicating that the MFM should only be activated after an explicit request from the TE (or any other IoT entity with appropriate access rights) | |
| MFM Requirements | A list of one or more SL requirements that should be met when the MFM is activated. The MFM-CF may decide an operation method to achieve the requirement by itself or as indicated in the MFM Operation Method attribute. The requirements of the MFM Service may comprise one or more of: | |
| | | • Stop or decrease the rate of SL messages destined for the TE. For example, fewer than 5 SL messages per hour. |
| | | • Stop or decrease the rate of one or more predefined types of SL messages destined for the TE. For example, SL notification messages. |
| | | • Stop or decrease rate of SL messages destined for the TE below a predefined priority. For example, low priority SL data messages. |
| | | • Stop or decrease rate of SL messages originated from a predefined SL entity destined for the TE |
| MFM Operation Method | The MFM operation method that may be used by the MFM-CF to achieve MFM requirement. Various MFM operation methods are described in greater detail hereinafter. | |
| MFM Policy Creator | The identifier of the TE that created the MFM Policy | |
| MFM Target Entity List | A list of SL entities that are managed when the MFM is activated. These SL entities may include the entity that creates the MFM Policy and the entities that are registered to it. For example, a device may create a MFM Policy which also applies to applications that are hosted on the device. | |

With continued reference to Fig. 9, in step 2, the MFM Service may collect MFM Context from the published metadata of the TEs (e.g., IoT entities 908a-c) that have registered to the SL 904 and from the SL requests that are issued and/or targeted towards the TEs as well as their responses. For example, the MFM Service 906 may collect the service schedule of TEs that have registered to the SL 904. The MFM Service may also collect MFM Context by periodically querying the state of the TEs, for example, the remaining battery power, the communication link quality of the TEs, or other state of the TE. The MFM Service may then analyzes the MFM Context against the MFM Activation Criteria defined within the MFM policies that have been created and configured within the MFM Service 906. Based on the MFM Activation Criteria defined within the MFM policies, the MFM Service may evaluate the MFM Context it collects to determine whether any MFM Activation Criteria have been met in order to determine whether to activate the MFM Service and perform the MFM Requirements for the TE in accordance with the relevant MFM policy.

In step 3, based on MFM Activation Criteria defined within a MFM policy, the MFM Service may detect that the MFM Service should be activated or deactivated for a TE. Alternatively, the MFM Service may also allow a TE, such as a user application, to send an explicit request to define and manually activate the MFM Service for the TE. In such a case, the request may contain all or some of the information listed in Table 2. An MFM Action Management Entry may be created after the MFM Service is activated for the TE based on the MFM Policy, as shown in Table 2. An MFM Action Management Entry may be removed after the MFM Service is deactivated for the TE.

**Table 2 - Message Flow Management (MFM) Action Management Entry**

| **Attribute** | **Description** |
|---|---|
| MFM Target Entity List | A list of SL entities that are managed when the MFM is activated. These SL entities may include the entity that creates the MFM policy and the SL entities that are registered to it. |
| MFM Message Type | The type of SL messages that are managed by the MFM Service, e.g. a notification message. Note that, the type of the message is one of parameters in a message. Other parameters in a message can also be used for the MFM Service. |
| MFM Message Priority | The priority of SL messages that are managed by the MFM Service, e.g. low priority data messages. |
| MFM Message Rate | The rate of message that is managed by the MFM Service, e.g. 10 messages per hour. |
| MFM Expirations | The end time of the MFM Service activation. For example, the time TE becomes available to provide service based on its service schedule. |
| MFM Action Performer List | A list of SL entities that host MFM-CFs to perform MFM actions instructed by the MFM-MF. Note that these SL entities may be added or removed based on one of the MFM operation methods disclosed below. |
| MFM Action Manager List | A list of SL entities that have a MFM-MF and can provide the MFM Service on behalf of the MFM-MF that triggered the MFM Service activation. Note that these SL entities on this list may be added or removed based one of the MFM operation methods disclosed below. |

In step 4, based on the MFM Requirements defined within a MFM policy, the MFM Service may perform MFM operations that can control the rate of SL messages that are destined for the TEs, as further described below. The MFM Service may initiate MFM operation methods such as but not limited to the following:
- When an MFM-MF receives a SL message that is subjected to activation of the MFM Service, the MFM-MF may coordinate with the MFM-CF on the Originator of the SL message to stop or decrease future messages to the TEs in Table 2, *e.g.,* TEs on the same device that may be managed as a group;
- When an MFM-MF receives a SL message that is subjected to activation of the MFM Service, the MFM-MF may coordinate with a MFM-CF hosted on an intermediate SL entity that receives and processes the SL message on its route to the destined TEs; the MFM-MF may request the intermediate SL entity's MFM-CF to buffer or drop the message to the TEs;
- The MFM-MF may coordinate with MFM-MFs on one or more other SL entities to provide the MFM Service.

### Service Layer Message Flow Management Operation Methods

Several SL MFM operational methods are proposed to fulfill the MFM requirements described above. The MFM-MF may perform a MFM operation reactively when it receives a SL message that is subjected to MFM. For example, if the TE cannot receive SL notification messages as defined in the MFM requirement of a MFM policy, a MFM operation can be initiated reactively when the MFM-MF receives a SL notification message destined for the TE. The MFM-MF may also start a MFM operation proactively when the MFM is activated. For example, if the TE is not available based on its service schedule, a MFM operation may be initiated proactively before receiving any SL message destined to the TE. Both reactive and proactive methods are described more fully below.

### Reactive Service Layer Message Flow Management Method

When the MFM-MF receives a SL message that is subjected to MFM, the MFM-MF may coordinate with the Originator of the SL message to meet the MFM requirements defined in the MFM policies. In addition, the MFM-MF may also coordinate with one or more MFM-CF on SL entities that are on the SL path that the SL message travels towards the TE. Both scenarios are described below.

### End to End Reactive Service Layer Message Flow Management

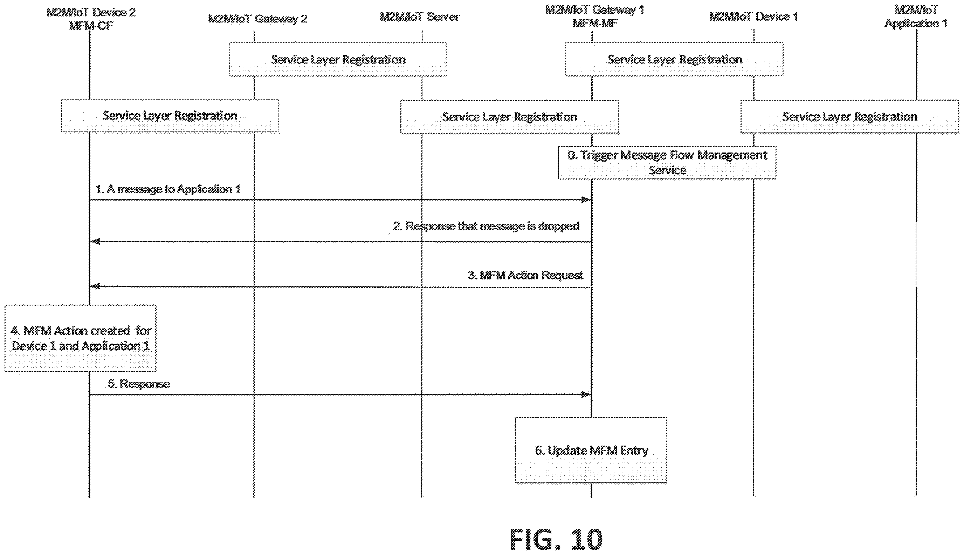

Fig. 10 shows an example MFM operational method that may be performed when the MFM-MF receives a SL message that is subjected to MFM. In Fig. 10, SL entities (Gateways, Servers and Devices) and application entities (Applications) are used as an example. These SL entities may have a SL registration relationship as shown in Fig. 10. It may be assumed that Device 2 which may send a SL message to Device 1 has a SL that supports a MFM-CF.

In step 0, based on an MFM Activation Criteria defined within a MFM policy, the MFM Service on Gateway 1 ma activate the MFM for Device 1.

In step 1, Device 2 may send a SL request message to Device 1. For example, Device 2 may send a SL notification message to Device 1.

In step 2, when the Registrar entity of Device 1, i.e. Gateway 1, receives the request, the MFM-MF on Gateway 1 may decide whether the request is subject to MFM. For example, based on some or all of the information in Table 2, Gateway 1 may check the type and the priority of the message, and may decide whether the message is subject to MFM. Gateway 1 may also measure the rate of the message destined for the Device 1 and decide whether the message is subject to MFM. If the message is subject to MFM, then Gateway 1 may send a response to Device 2 that the message is dropped due to MFM. When Device 2 receives the response, it may not retransmit the same SL message.

In step 3, Gateway 1's MFM-MF may send a MFM Action Request to Device 2 to create a MFM action on Device 2's MFM-CF for Device 1 and the SL entities that register to Device 1. In the MFM request, the MFM-MF on Gateway 1 may specify all or some of the MFM information as shown in Table 2. The MFM information may include the expected message rate to Device 1 and the duration of the MFM Service. For example, Gateway 1's MFM-MF may indicate in the request, Device 1's service schedule and that Device 1 is not available to receive any SL notification messages when it is not available for service.

In step 4, after receiving the request, the MFM-CF on Device 2 may create a MFM action entry to store the MFM action. The MFM action entry may contain some or all of the information listed below in Table 3. The MFM-CF on Device 2 may cooperate with other SL functions on Device 2 to perform the MFM actions. For example, the MFM-CF may cooperate with a SL subscription and notification function to buffer or filter/drop notifications that target Device 1 and Application 1 until the time specified by the MFM duration.

**Table 3 - Message Flow Management (MFM) Action Entry**

| **Attribute** | **Description** |
|---|---|
| MFM Message Targets | The SL entity that is associated with the MFM Entry, for example, Device 1 and Application 1. |
| MFM Message Type | The type of SL messages that is managed by the MFM, for example, notification message. Note that, the type of the message is one of parameters in a message. Other parameters in a message can also be used for MFM. |
| MFM Message Priority | The priority of SL message that is managed by the MFM, for example, low priority data message |
| MFM Message Rate | The rate of message that is managed by the MFM, for example, 10 messages per hour. |
| MFM Duration | The end time of the MFM. For example, the time when the TE is available again for service based on its service schedule. |

In step 5, the MFM-CF on Device 2 may send a MFM action response message to the MFM-MF on Gateway 1.

In step 6, the MFM-MF on Gateway 1 may add Device 2 into the MFM Action Performer List. If there is an update about the MFM action for Device 1, then the MFM-MF on Gateway 1 may send a MFM action request to update the MFM Action Entry on the MFM-CF on Device 2.

### Hop-by-Hop Reactive Service Layer Message Flow Management

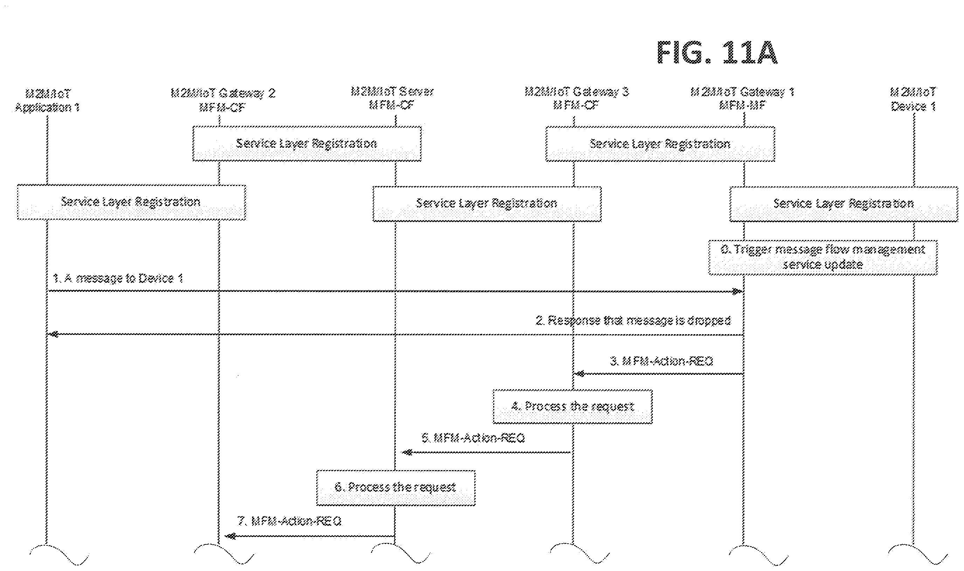

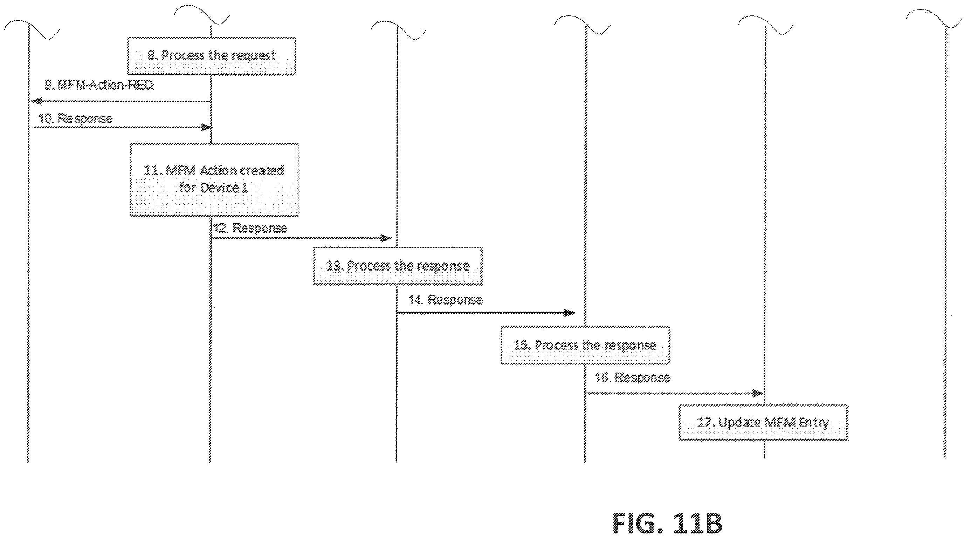

Figs. 11A and 11B together show a MFM operational method in which an MFM-MF may send a MFM Action Request to an Originator. The MFM-CF on SL entities along the SL path will process the request and decide whether to create a MFM action. In the example of Figs. 11A and 11B, the Registrar entity (i.e. Gateway 2) of the Originator (i.e. Application 1) performs MFM actions for the TE (Device 1).

In step 0, based on MFM Activation Criteria defined within a MFM Policy, the MFM Service on Gateway 1 may activate the MFM for Device 1.

In step 1, Application 1 may send a SL request message to Device 1. For example, Application 1 may send a request message to retrieve a resource hosted on Device 1.

In step 2, when the Registrar entity of Device 1, i.e. Gateway 1, receives the request, Gateway 1 may decide whether the request is subject to MFM. For example, MFM may be activated because Device 1 is not available for service and does not want to receive any SL message. In this case, Gateway 1 may send a SL response message to Application 1 stating that Device 1 is not available and that the SL request message has been dropped.

In step 3, the MFM-MF on Gateway 1 may send a MFM Action Request to a MFM-CF on an intermediate SL entity along the SL routing path to Application 1. In the MFM Action Request, the MFM-MF on Gateway 1 may indicate a number of SL entities and the criteria of the SL entity that can create a MFM action for Device 1. For example, the MFM-MF on Gateway 1 may specify it only allows the SL entity that is the closest to the originator on the SL path to create the MFM action. In another example, the MFM-MF on Gateway 1 may specify it allows any SL entity on the SL path to create the MFM action if the SL entity has originated or forwarded messages that are subjected to MFM. The MFM-MF on Gateway 1 may specify some or all of the MFM information of Table 2. The MFM context information may include the expected message rate to Device 1 and the duration of the MFM action period. For example, Gateway 1 may indicate in the request Device 1's service schedule and that it is not currently available to receive any SL messages until a specified time. Alternatively, the content of the MFM action request may be included in the SL response from Gateway 1 in step 2.

In step 4, the MFM-CF on Gateway 3 may store the MFM Action Request and forward it to the next hop along the SL routing path (i.e. the Server) for Application 1.

In step 5, the MFM-CF on Gateway 3 may forward the MFM Action Request to the Server.

In step 6, the MFM-CF on the Server may store the MFM Action Request and forward it to the next hop along the SL routing path (i.e. Gateway 2) for Application 1.

In step 7, the MFM-MF on the Server may forward the MFM Action Request to Gateway 2.

In step 8, the MFM-CF on Gateway 2 may store the MFM Action Request. In this example, since Application 1 is registered to Gateway 2, if Gateway 2 knows Application 1 does not have a MFM-CF and cannot process the request, Gateway 2 will not forward the MFM Action Request to Application 1 and process the request as described in step 11. Otherwise, Gateway 2 forwards the MFM Action Request to Application 1.

In step 9, Gateway 2 forwards the MFM Action Request to Application 1.

In step 10, Application 1 responds with an error since it does not host a MFM-CF and cannot process the request.

In step 11, the MFM-CF on Gateway 2 may know that Application 1 does not have a SL that supports a MFM-CF either by indicating in the response or from registration information. The MFM-CF on Gateway 2 creates a MFM action entry to store the MFM action. The MFM action entry may contain information in Table 3. The MFM-CF can cooperate with SL functions on the same entity to perform MFM operations. For example, if the TE (i.e. Device 1) is not available to receive any SL messages, the MFM-CF can cooperate with SL forwarding function to not send SL messages that are destined for Device 1.

In step 12, MFM-CF on Gateway 2 may send a MFM action response message to MFM-CF on Server and indicates in the response that it has performed the MFM action for the TE (i.e. Device 1).

In step 13, after receiving the response, the MFM-CF on the Server knows that the MFM-CF on Gateway 2 has performed MFM actions for the TE. The MFM-CF on the Server can decide whether it will also perform an MFM action for the TE based on the number of SL entities allowed and the criteria to create the MFM action for the TE. If so, it may create a MFM action entry to store the MFM action. The MFM action entry may contain some or all of the information in Table 3. The MFM-CF can cooperate with SL functions on the same entity to perform MFM operations. For example, if the TE is not able to receive any SL messages, the MFM-CF can cooperate with the SL forward function to stop forwarding or sending SL messages that are destined for the TE.

In step 14, the MFM-CF on the Server may send a MFM action response message to the MFM-CF on Gateway 3 and may indicate in the response that the SL entity(s) (may include itself) on the SL path that have created the MFM action for the TE.

In step 15, after receiving the response, the MFM-CF on Gateway 3 knows that the MFM-CF on Gateway 2 and/or the Server has performed MFM actions for the TE. The MFM-CF on Gateway 3 can decide whether it may also perform MFM actions for the TE. If so, it may create a MFM action entry to store the MFM action. The MFM action entry may contain some or all of the information in Table 3. The MFM-CF may cooperate with the SL functions on the same entity to perform MFM operations. For example, if the TE is not able to receive any SL messages, the MFM-CF may cooperate with a SL forward function to stop forwarding or sending SL messages that are destined for the TE.

In step 16, the MFM-CF on Gateway 3 may send a MFM action response message to the MFM-MF on Gateway 1 and indicate in the response SL entities on the SL path (may include itself) that have created a MFM action for the TE.

In step 17, the MFM-MF on Gateway 1 may add SL entities on the SL path that have performed the MFM action for the TE into the MFM Action Performer List. If there is an update about the MFM action for the TE, for example, the MFM is deactivated since the state of the Device 1 has changed, then the MFM-MF on Gateway 1 may send a MFM action request to update the MFM Action Entry on all SL entities on the SL entities List.

### Hop by Hop Reactive Service Layer MFM with MFM Discovery

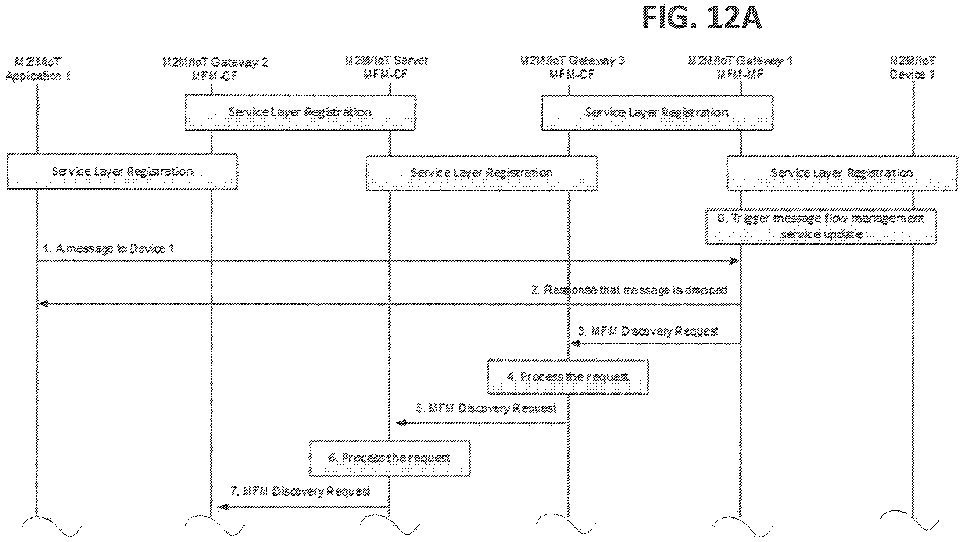

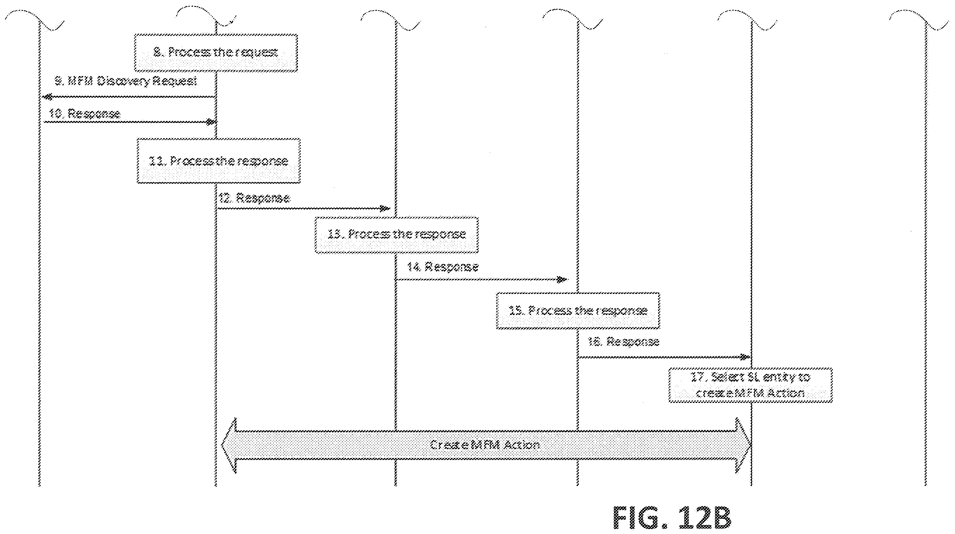

Figs. 12A and 12B show a MFM operational method in which a MFM-MF of the registrar SL serving the TE may send a MFM Discovery Request to the Originator. The MFM-CF on SL entities along the SL path may process the request and respond to the MFM-MF about whether they are willing to perform MFM actions for the TE. The MFM-MF may then choose from the SL entities that perform MFM actions for the TE and then may send a MFM Action Request to these entities. In the example of Figs. 12A and 12B, the MFM-MF discovers and selects Registrar entity (i.e. Gateway 2) of the Originator (i.e. Application 1) that performs MFM actions for the TE (Device 1).

In step 0, based on MFM Activation Criteria defined within a MFM Policy, the MFM Service on Gateway 1 may activate MFM for Device 1.

In step 1, Application 1 may send a SL request message to Device 1. For example, Application 1 may send a request message to retrieve a resource hosted on Device 1.

In step 2, when the Registrar entity of Device 1, i.e. Gateway 1, receives the request, Gateway 1 may decide whether the request is subject to MFM. For example, MFM is activated since Device 1 is not available for service and does not want to receive any SL messages. In this case, Gateway 1 may send a SL response message to Application 1 stating that Device 1 is not available and that the SL request message has been dropped.

In step 3, the MFM-MF on Gateway 1 may send a MFM Discovery Request to a MFM-CF on an intermediate SL entity along the SL routing path to Application 1. In the MFM Discovery Request, the MFM-MF on Gateway 1 may indicate whether the SL entity has the capability and offers to create a MFM action for Device 1. The MFM Discovery Request can also request to obtain the history statistics, e.g. message rate, about SL messages that are subject to MFM, e.g. a notification message destined to Device 1.

In step 4, the MFM-CF on Gateway 3 may store the MFM Discovery Request and may forward it to the next hop along the SL routing path (i.e. the Server) for Application 1.

In step 5, the MFM-CF on Gateway 3 may forward the MFM Discovery Request to the Server.

In step 6, the MFM-CF on the Server may store the MFM Discovery Request and forward it to the next hop along the SL routing path (i.e. Gateway 2) for Application 1.

In step 7, the MFM-CF on the Server may forward the MFM Discovery Request to Gateway 2.

In step 8, the MFM-CF on Gateway 2 may store the MFM Discovery Request. Since Application 1 is registered to Gateway 2, if Gateway 2 knows Application 1 does not have a MFM-CF and cannot process the request, Gateway 2 will not forward the MFM Action Request to Application 1 and may process the request as described in step 11. Otherwise, Gateway 2 may forward the MFM Discovery Request to Application 1.

In step 9, Gateway 2 may forward the MFM Action Request to Application 1.

In step 10, Application 1 may respond with an error since it does not host a MFM-CF and cannot process the request.

In step 11, after receiving the response, the MFM-CF on Gateway 2 may add information in the response about whether it offers to create a MFM action for Device 1. The MFM-CF on Gateway 2 may also provide the history statistics about SL messages that are subject to MFM if indicated in the request.

In step 12, the MFM-CF on Gateway 2 may send a MFM Discovery Response message to the MFM-CF on the Server.

In step 13, similar to step 11, after receiving the response, the MFM-CF on the Server may add information in the response about whether it offers to create a MFM action for Device 1 in the response. The MFM-CF on the Server may also provide the history statistics about SL messages that are subject to MFM if indicated in the request.

In step 14, the MFM-CF on the Server may send a MFM Discovery Response message to the MFM-CF on Gateway 3.

In step 15, similar to Step 11, after receiving the response, the MFM-CF on Gateway 3 may add information in the response about whether it offers to create a MFM action for Device 1. The MFM-CF on Gateway 3 may also provide history statistics about SL messages that are subject to MFM if indicated in the request.

In step 16, the MFM-CF on Gateway 3 may send a MFM Discovery Response message to the MFM-MF on Gateway 1.

In step 17, by extracting information from the MFM Discovery Response message, the MFM-MF can obtain a list of entities on the SL path that offer to perform a MFM action for the TE. The MFM-MF may also obtain history statistics about SL messages that are subject to MFM and originated or forwarded by these SL entities. Based on this information, the MFM-MF on Gateway 1 can decide one or more SL entities to perform MFM actions. For example, the MFM-MF on Gateway 1 can choose the SL entity that is the closest to Application 1, e.g. Gateway 2 and which is the registrar entity of Application 1. In another example, the MFM-MF on Gateway 1 can choose the SL entities that have sent or forwarded SL messages larger than a threshold. The MFM-MF on Gateway 1 may then request to create a MFM action on the selected SL entity, for example, using the procedure described above for End-to-End Reactive Service Layer Message Flow Management illustrated in Fig. 10.

### Proactive Message Flow Management

In the methods for reactive message flow management discussed above, the MFM-MF on Gateway 1 may only start a MFM operation method when it receives a SL message that is subject to MFM based on MFM policies. Described below are methods in which the MFM-MF may coordinate with other SL entities after MFM is activated and before receiving any SL messages. These SL entities may provide MFM services along with Gateway 1. A discovery procedure may be initiated by the MFM-MF to find these SL entities; the SL entities should meet the following criteria: (1) have a MFM-MF function, and (2) be willing to provide MFM services for the TE.

Note that the objective of the discovery procedure proposed here may be different from the proposed discovery procedure for the reactive operation methods discussed above. That is, the objective of the discovery procedure for the reactive operation methods is to find a SL entity that is closer to the Originator. The objective of the discovery procedure in the proactive methods described below is to find a SL entity that is not too far from the TE.

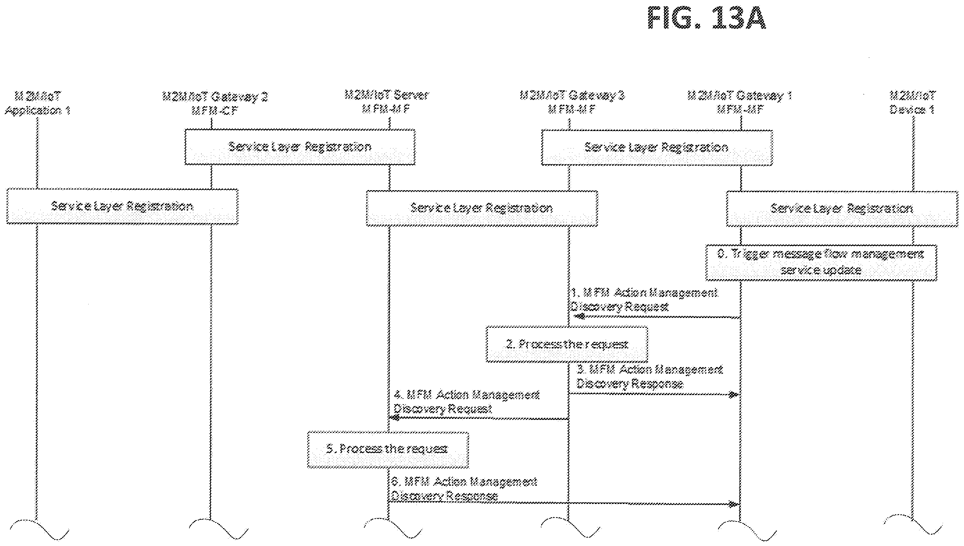

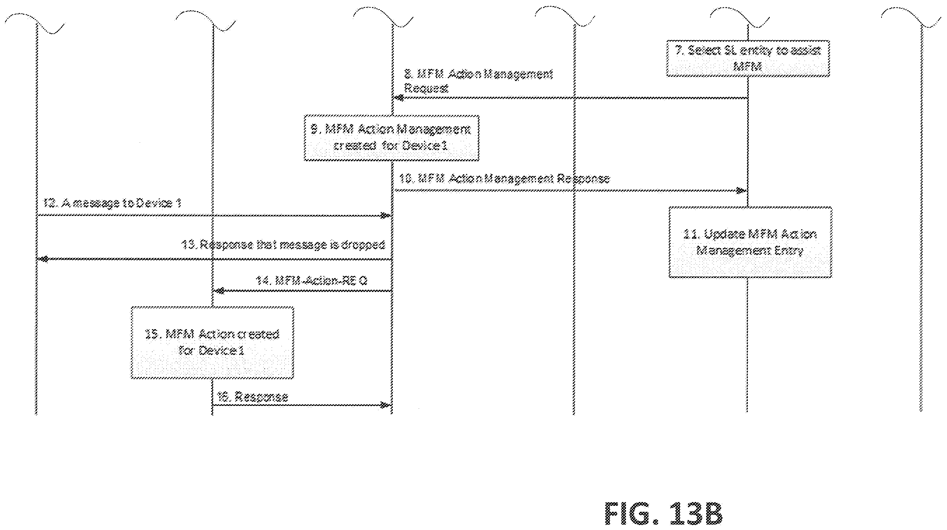

Figs. 13A-B show a method for proactive message flow management. In the example illustrated in Figs. 13A-B, the Server is discovered and selected by the MFM-MF on Gateway 1 to Provide MFM services along with Gateway 1 for the TE.

In step 0, based on MFM Activation Criteria defined within a MFM Policy, the MFM Service on Gateway 1 activates the MFM for Device 1.

In step 1, the MFM-MF on Gateway 1 may send a MFM Action Management Discovery Request to its Registrar Entity, i.e., Gateway 3, to discover SL entities that can perform MFM action management along with Gateway 1. In the request, the MFM-MF on Gateway 1 may specify the maximum number of times this request can be forwarded. For example, the MFM-MF on Gateway 1 may specify in the request it can be forwarded twice.

In step 2, Gateway 3 may receive the MFM Action Management Discovery Request and may determine whether it has capability to offer MFM action management for the TE. Gateway 3 may also decrease the maximum number of times this request can be forwarded by 1. If the maximum number of times is equal to or greater than 1, Gateway 3 may forward the request to its Registrar Entity.

In step 3, Gateway 3 may send an Action Management Discovery Response back to the MFM-MF on Gateway 1. In the response, Gateway 3 may indicate it does not have a MFM-MF capability but that it has a MFM-CF which could create a MFM action for the TE.

In step 4, the MFM-MF on Gateway 3 may forward the MFM Action Management Discovery Request to its Registrar entity, i.e. the Server.

In step 5, the Server may receive the MFM Action Management Discovery Request and may determine whether it has capability to offer MFM action management for the TE. The Server may decrease the maximum number of times this request can be forwarded by 1. If the maximum number of times is equal to or greater than 1, the Server may forward the request to its Registrar Entity. In this example, because the Server does not have a Registrar SL Entity, it does not forward the request.

In step 6, the Server may send an Action Management Discovery Response back to the MFM-MF on Gateway 1. In the response, the Server may indicate it has the MFM-MF capability to offer MFM Action Management for the TE.

In step 7, the MFM-MF on Gateway 1 may select the SL Entity that offers MFM Action Management, i.e. the Server, and the SL Entity that can perform the MFM action, i.e. Gateway 3. The MFM-MF on the Gateway 1 may start a procedure to create MFM Action Management on the Server as described in steps 8-11. The MFM-MF on Gateway 1 can use the procedure described above for end-to-end reactive service layer message flow management (and illustrated in Fig. 10) to create the MFM action on Gateway 3 as

In step 8, the MFM-MF on Gateway 1 may send a MFM Action Management Request to the MFM-MF on the Server to create a MFM Management Entry. In the request, the MFM-MF on Gateway 1 may specify some or all of the MFM information shown in Table 2. The MFM context information may include the expected message rate to Device 1, and the duration of the MFM action period. For example, the MFM-MF on Gateway 1 may indicate in the request about Device 1's service schedule that defines when the device can and cannot receive SL notification messages.

In step 9, after receiving the request, the MFM-MF on the Server may create a MFM action management entry to store the MFM information, such as some or all of the information shown in Table 2. By creating the MFM action management entry, the MFM-MF on the Server provides the MFM service along with Gateway 1 for the TE.

In step 10, the MFM-MF on the Server may send a MFM Action Management response message to the MFM-MF on Gateway 1.

In step 11, the MFM-MF on Gateway 1 may add the Server into the MFM Action Manager List. If there is an update about the MFM management for the TE, for example, the MFM may be deactivated since the state of the Device 1 has changed. The MFM-MF on Gateway 1 may send a MFM management request to update the MFM Action Management Entry on the MFM-MF on the Server.

In step 12-16, when the Server receives a SL message that is subject to MFM Service, the MFM-MF on the Server may start MFM operations as described above with respect to the reactive service layer message flow methods.

### Automated Service Layer Message Flow Management Deactivation Procedure

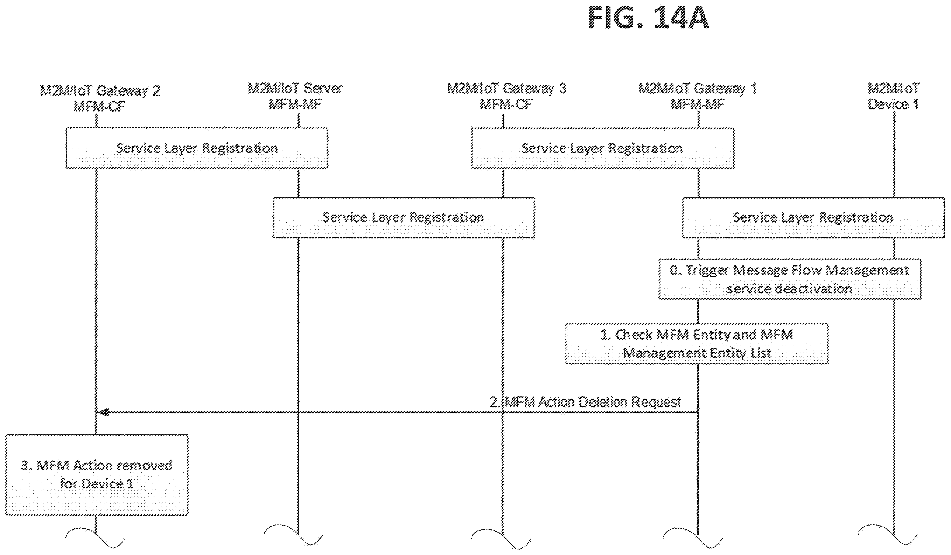

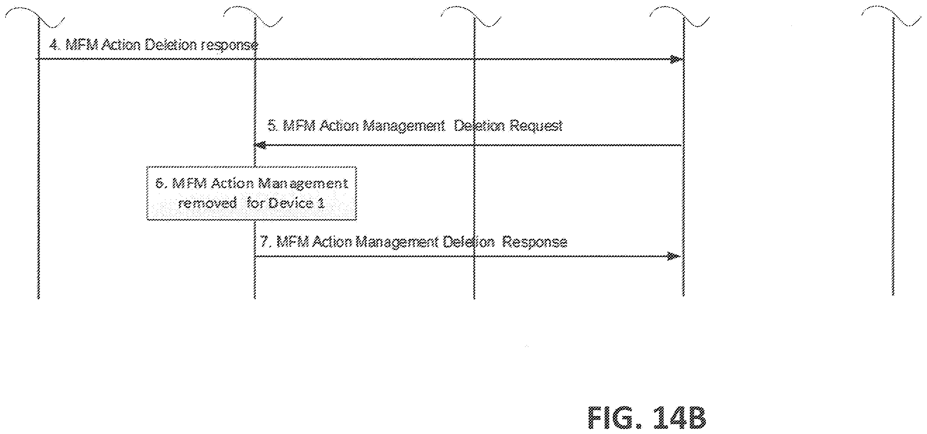

The MFM-MF may analyze the MFM Context against MFM Activation Criteria defined within one or more MFM Policies that have been created and configured within the MFM Service. Based on MFM Activation Criteria defined within a MFM Policy, the MFM Service may detect that a MFM should be deactivated. Alternatively, the MFM Service may allow a TE (e.g. user application) to send an explicit request to manually deactivate MFM. Once deactivated, the MFM Service could then perform MFM actions for the TE to deactivate the MFM. Figs. 14A-14B show a method for MFM deactivation.

In step 0, based on MFM Activation Criteria defined within a MFM Policy, the MFM Service on Gateway 1 may determine to deactivate the MFM for Device 1.

In step 1, the MFM-MF on Gateway 1 may check the MFM Action Performer List and MFM Action Manager List. For each entry in MFM Action Performer List, the MFM-MF on Gateway 1 may initiate a MFM action deletion procedure as described in steps 2-4. For each entry in the MFM Action Manager List, the MFM-MF on Gateway 1 may initiate a MFM action management deletion procedure as described in step 5-7.

In step 2, the MFM-MF on Gateway 1 may send a MFM action deletion request to the SL entity in the MFM Action Performer List, e.g. Gateway 2. The request may contain the SL ID of the TE, i.e. Device 1.

In step 3, after receiving the request, the MFM-CF on Gateway 2 may remove the MFM action associated with Device 1.

In step 4, the MFM-CF on Gateway 2 may send a MFM action deletion response to Gateway 1 to confirm the deletion of the MFM action.

In step 5, the MFM-MF on Gateway 1 may send a MFM action management deletion request to the SL entity(ies) that are in the MFM Action Manager Entity list, e.g. the Server. The request may contain the SL ID of the TE, i.e. Device 1.

In step 6, after receiving the request, the MFM-MF on the Server may remove the MFM action management associated with Device 1. If the Server also has a MFM Action Performer Entity list associated with Device 1, for each entry in the list, the MFM-MF on the Server may initiate the MFM action deletion procedure described in steps 2-4.

In step 7, the MFM-MF on the Server may send a MFM management action deletion response to Gateway 1 to confirm the deletion of the MFM action management.

### OneM2M Implementation

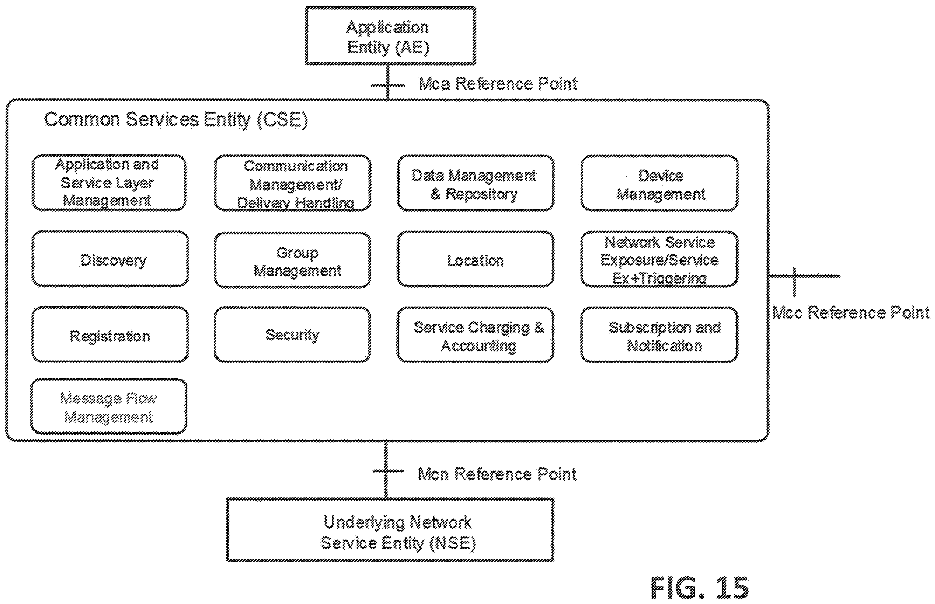

As mentioned above, the oneM2M standards organization defines capabilities supported by a oneM2M Service Layer. The oneM2M Service Layer may be instantiated as a Capability Services Entity (CSE) which comprises a set of Capability Service Functions (CSF). The Message Flow Management Service described herein may be implemented as a new CSF, as shown in Fig. 15. CSEs may communicate via the Mcc and Mcc' reference points of the oneM2M architecture to manage registration. An Application Entity (AE) may communicate via the Mca reference point to manage registration.

### Attributes and Resources

The following new resources and attributes may be defined to support the Message Flow Management Service described herein within the oneM2M architecture.

### oneM2M <mfmPolicy> Resource

In a oneM2M implementation, the MFM CSF may support a MFM Policy resource such as a <mfmPolicy> resource. Such a <mfmPolicy> resource may be created, updated and deleted by an AE or CSE or provisioned into the MFM CSF using out-of-band mechanisms, such as device management. A <mfmPolicy> resource may support attributes which are based on the MFM Policy attribute definitions defined in Table 1. Table 4 shows one example of the attributes that may be defined for the <mfmPolicy> resource.

**Table 4 - <mfmPolicy> Resource Attributes**

| **Attribute** | **Description** | |
|---|---|---|
| mfmPolicyID | The identifier of the Policy | |
| mfmTargetEntity | The identifier of the Target Entities that is managed under the policy | |
| mfmConext | Context information is monitored by the MFM CSF for the TE. For example, the battery power of the TE, the signal strength of TE and service schedule of the TE, etc. | |
| MFM Context Monitor Method | Method for the MFM CSF to monitor MFM context information. For example, the MFM Service can collect the service schedule of TEs that have registered to the SL. The MFM Service can also collect MFM Context by periodically querying the state of the TEs, for example, the remaining battery power, the communication link quality of the TEs. | |
| mfmActivationCriteria | Conditions that must be met for the MFM CSF to activate the MFM for the TE. For example, the battery power of the TE is below a threshold, the signal strength of TE is below a threshold, the TE is not available for based on its service schedule, etc. | |
| mfmRequirement | A list of one or more SL requirements that should be met when the MFM is activated. The requirements of the MFM Service may include: | |
| | | - Stop or decrease rate of SL messages destined for the TE. For example, fewer than 5 SL message per hour. |
| | | - Stop or decrease rate of one or more predefined types of SL messages destined for the TE. For example, SL notification messages. |
| | | - Stop or decrease rate of SL messages destined for the TE below a predefined priority. For example, low priority SL message data message. |
| | Stop or decrease rate of SL messages originated from a predefined SL entity destined for the TE | |
| mfmOperationMethod | The MFM operation method that should be used by the MFM CSF to achieve MFM requirement. | |
| linkedMfmPolicyIDs | A link to one or more other <mfmPolicy> resources that are used by the MFM CSF to create message flow management defined by multiple <mfmPolicy> resources. | |

### oneM2M <mfmActionManagement> Resource

In a oneM2M implementation, once MFM is activated for a TE, the MFM CSF may manage MFM action(s) in a new <mfmActionManagement> resource. The <mfmActionManagement > resource may be created, updated and deleted by the MFM CSF when a MFM is activated, modified, or torn-down, respectively. The <mfmActionManagement > resource may support some or all of the attributes defined in Table 5, which are based on the MFM Action Management attribute definitions defined in Table 2.

**Table 5 - < mfmActionManagement > Resource Attributes**

| **Attribute** | **Description** |
|---|---|
| mfmTargetEntity | The identifier of the Target Entity that is managed |
| mfmMessageType | The type of SL messages that are managed by the MFM, e.g. a notification message. Note that, the type of the message is one of parameters in a message. Other parameters in a message can also be used for MFM. |
| mfmMessagePriority | The priority of SL messages that is managed by the MFM, e.g. low priority data messages. |
| mfmMessageRate | The rate of message that is managed by the MFM, e.g. 10 messages per hour. |
| mfm Expirations | The end time of the MFM. For example, the time TE is back to provide service based on its service schedule. |
| mfmActionPaticipateList | A list of SL entities that have MFM CSF to perform MFM actions instructed by other SL entities. |
| mfmActi onManager | A list of SL entities that have MFM CSF and can provide MFM Service on behalf of the MFM-MF that triggered the MFM. |

### oneM2M <mfmAction> Resource

A new <mfmAction> resource may be defined in which the MFM CSF may store a MFM Action. The <mfmAction> resource may be created, updated, and deleted by the MFM CSF when a MFM Action is established, modified, or torn-down, respectively. The <mfmAction> resource may support some or all of the attributes defined in Table 6.

**Table 6 - <mfmAction> Resource Attributes**

| **Attribute** | **Description** |
|---|---|
| mfmTargetEntity | The identifier of the Target Entity that is managed |
| mfmMessageType | The type of SL messages that is managed by the MFM, e.g. notification messages. |
| mfmMessagePriority | The priority of SL messages that is managed by the MFM, e.g. low priority data messages. |
| mfmMessageRate | The rate of message that is managed by the MFM, e.g. 10 messages per hour. |
| mfmDuration | The end time of the MFM. For example, the time TE is back to provide service based on its service schedule. |

### oneM2M Procedure Enhancements

### Reactive MFM Procedure

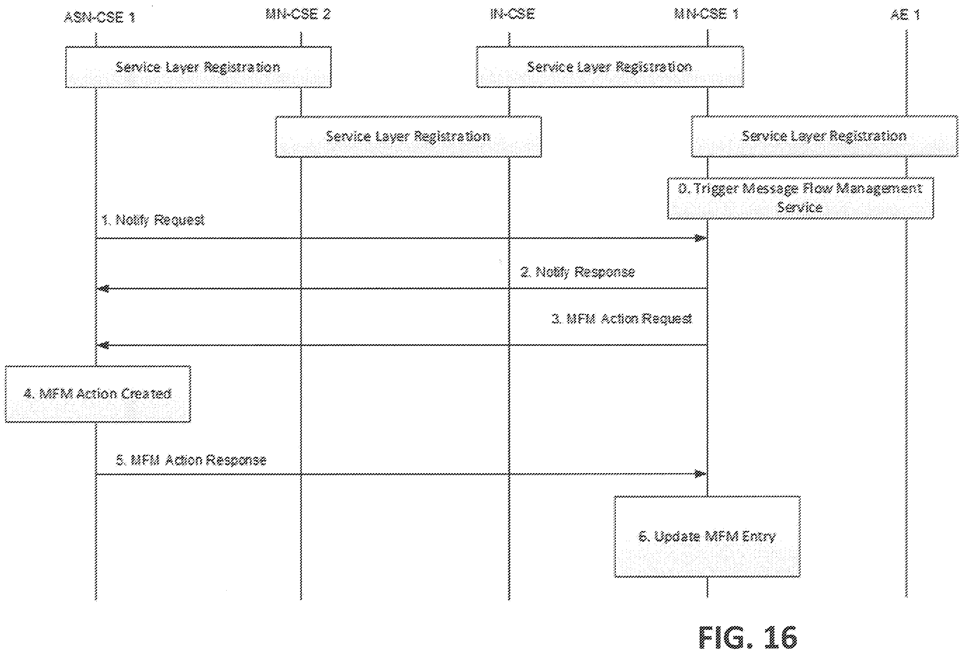

Fig. 16 illustrates an MFM procedure for use in a oneM2M architecture for a scenario in which an MFM CSF receives a SL message that is subjected to MFM. In the example of Fig. 16, CSEs and AEs are identified as performing the method. These SL entities may have a SL registration relationship as illustrated in Fig. 16.

In step 0, based on MFM Activation Criteria defined within a MFM Policy, the MFM CSF on MN-CSE 1 may activate the MFM for AE 1 by creating a <mfmActionManagement> resource as shown in Table 7. For example, AE 1 would not receive a notification request.

**Table 7 - < mfmActionManagement > Resource Associated with AE 1 on MN-CSE 1**

| **Attribute** | **Content** |
|---|---|
| mfmTargetEntity | AE 1 |
| mfmMessageType | Notification message. |
| mfmMessageRate | 0 |
| mfmPaticipateList | None |
| mfmManagementList | None |

In step 1, ASN-CSE 1 may send a service request message to AE 1. For example, ASN-CSE 1 may send a SL notification request to AE 1.

In step 2, when the Registrar entity of AE 1, i.e. MN-CSE 1, receives the request, the MFM CSF on MN-CSE 1 may decide whether the request is subject to MFM. For example, if the MFM is activated and AE 1 does not want to receive any SL notification request messages, then MN-CSE 1 may send a response to ASN-CSE 1 that the message is dropped due to MFM.

In step 3, MSN-CSE 1's MFM CSF may send a MFM Action Request to ASN-CSE 1 to create a MFM action on ASN-CSE 1's MFM CSF for AE 1. The MFM Action Request may indicate that AE 1 does not want to receive any SL notification messages.

In step 4, after receiving the request, the MFM CSF on ASN-CSE 1 may create a MFM action resource to store the MFM action. The MFM action resource may contain some or all of the information in Table 3. For example, the MFM CSF on ASN-CSE 1 may cooperate with a SL subscription and notification function to drop notifications that target AE 1 until the time specified by the MFM duration as shown in Table 8.

**Table 8 - < mfmAction> Resource Associated with AE 1 on ASN-CSE 1**

| **Attribute** | **Content** |
|---|---|
| mfmTargetEntity | AE 1 |
| mfmMessageType | Notification message. |
| mfmMessageRate | 0 |

In step 5, the MFM CSF on ASN-CSE 1 may send a MFM action response message to the MFM CSF on MN-CSE 1.

In step 6, the MFM CSF on MN-CSE 1 may add ASN-CSE 1 into the mfmParticipateList.

### Proactive MFM Procedure

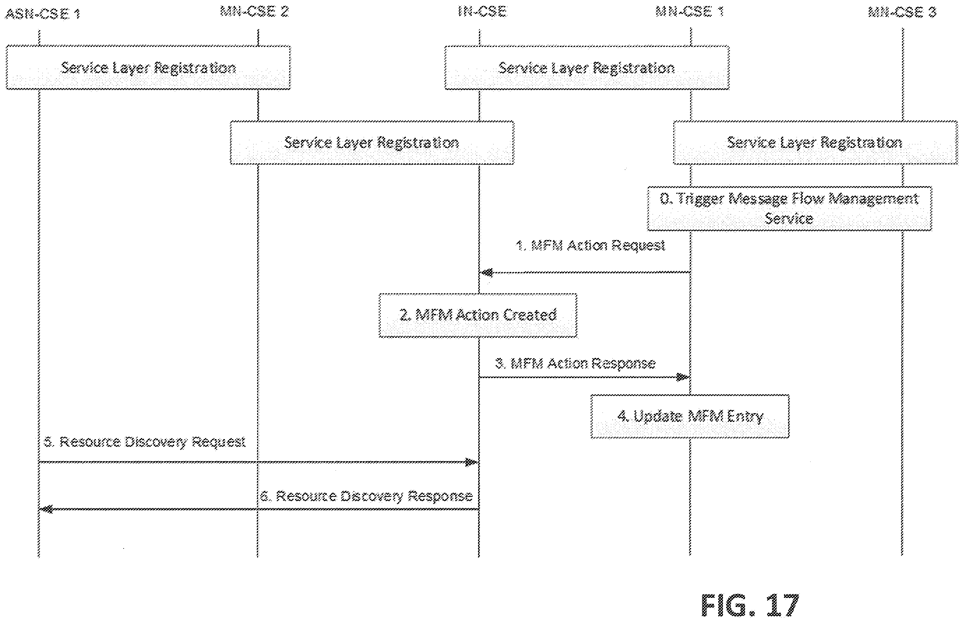

Figure 17 shows a method for proactive MFM, which may be employed after MFM is triggered and before the MFM CSF receives a SL message that is subjected to MFM. For purposes of illustration only, and without limitation, CSEs and AEs are illustrated as performing the method as one example. These SL entities may have a SL registration relationship as shown in Fig. 17.

In step 0, based on MFM Activation Criteria defined within a MFM Policy, the MFM CSF on MN-CSE 1 may activate the MFM for MN-CSE 3 by creating a <mfmActionManagement> as shown in Table 9. For example, MN-CSE 3 would not receive a request to retrieve its resources.

**Table 9 - < mfmActionManagement > Resource Associated with MN-CSE 3 on MN-CSE 1**

| **Attribute** | **Description** |
|---|---|
| mfmTargetEntity | MN-CSE 3. |
| mfmMessageType | Resource retrieve request. |
| mfmMessageRate | 0 |
| mfmPaticipateList | None |
| mfmManagementList | None |

In step 1, MSN-CSE 1's MFM CSF may send a MFM Action Request to IN-CSE to create a MFM action on IN-CSE's MFM CSF for MN-CSE 3. The MFM Action Request may indicate that MN-CSE 3 does not want to receive any request to retrieve its resource.

In step 2, after receiving the request, the MFM CSF on IN-CSE may create a MFM action resource to store the MFM action. The MFM action resource may contain information in Table 3. For example, with reference to Table 10, the MFM CSF on IN-CSE may cooperate with a resource discovery function not to discover the announced resource on MN-CSE 3. The MFM CSF on IN-CSE may cooperate with a SL forwarding function not to forward the request to retrieve the resource on MN-CSE 3.

**Table 10 - < mfmAction> Resource Associated with MN-CSE 3 on IN-CSE**

| **Attribute** | **Value** |
|---|---|
| mfmTargetEntity | MN-CSE 3 |
| mfmMessageType | Resource retrieve request. |
| mfmMessageRate | 0 |

In step 3, the MFM CSF on IN-CSE may send a MFM action response message to the MFM CSF on MN-CSE 1.

In step 4, the MFM CSF on MN-CSE 1 may add IN-CSE 1 into the mfmParticipateList.

In step 5, ASN-CSE 1 may send a service request message to IN-CSE. For example, ASN-CSE 1 may send a SL resource discovery request to IN-CSE.

In step 6, when IN-CSE receives the request, the MFM CSF on IN-CSE may decide whether the request is subject to MFM. For example, if the MFM is activated and MN-CSE 3 does not want to receive any SL resource retrieve request messages, then IN-CSE will not include the resource on MN-CSE 3 in the response to ASN-CSE 1.

### Message Flow Management User Interface

A user interface may be added to a M2M/IoT Server or Gateways that hosts a MFM CSF (e.g. an oneM2M IN-CSE or MN-CSE) to display Service Layer MFM Policy information and active MFM information. One example user interface is illustrated in Fig. 18. The user interface may allow a user to configure MFM Activation Criteria and Requirements. The user interface may also display a list of one or more entities for which MFM is active. The user interface of Fig. 18 may be produced and displayed, for example, using display 42 of Fig. 1C or display controller 96 and display 86 of Fig. 1D.

It is understood that any or all of the systems, methods and processes described herein may be embodied in the form of computer executable instructions (i.e., program code) stored on a computer-readable storage medium which instructions, when executed by a machine, such as an apparatus of an M2M network, including for example an M2M server, gateway, device or the like, perform and/or implement the systems, methods and processes described herein. Specifically, any of the steps, operations or functions described above may be implemented in the form of such computer executable instructions. Computer readable storage media include both volatile and nonvolatile, removable and non-removable media implemented in any non-transitory (i.e., tangible or physical) method or technology for storage of information, but such computer readable storage media do not includes signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which may be used to store the desired information and which may be accessed by a computer.

In the foregoing description and accompanying figures, specific terminology is employed for the sake of clarity. The claimed subject matter, however, is not intended to be limited to the specific terminology so selected.

This written description uses examples to disclose the subject matter of the claims, including the best mode, and also to enable any person skilled in the art to practice the claimed subject matter, including making and using any devices or systems and performing any incorporated methods. The patentable scope of this subject matter is defined by the claims, and may include other examples that occur to those skilled in the art.

## Claims

1. An apparatus (30) comprising at least one processor (32) and memory (44, 46), the memory storing executable instructions that, when executed by the at least one processor, implement a service layer entity of a communications network (12) and cause the service layer entity to perform operations comprising:
storing, in the memory, information comprising a policy associated with a target entity, the policy comprising information specifying at least one condition for triggering management of a flow of service layer messages to the target entity;
collecting a service schedule of the target entity from metadata that is published to the service layer and is associated with the target entity;
determining, based on the service schedule, to trigger management of the flow of service layer messages to the target entity; and
managing, based on the trigger determination and other information of the policy, the flow of service layer messages to the target entity.

2. The apparatus recited in claim 1, wherein the executable instructions further cause the service layer entity to perform operations comprising:
sending, based on the trigger determination, to one or more other service layer entities located remotely on the communications network, a message requesting the one or more other service layer entities to participate in managing the flow of service layer messages to the target entity.

3. The apparatus recited in claim 1, wherein managing the flow of service layer messages to the target entity comprises one or more of:
disabling one or more subscriptions of the target entity to resources hosted on the service layer entity and one or more other service layer entities located remotely on the communications network;
disabling one or more announced resources of the target entity hosted on the service layer entity and one or more other service layer entities located remotely on the communications network;
filtering results of one or more discover requests to remove results pointing to one or more resources of the target entity;
removing the target entity from one or more group resources; or
adjusting a rate of sending or forwarding of service layer messages to the target entity.

4. The apparatus recited in claim 1, wherein the executable instructions further cause the service layer entity to perform operations comprising:
collecting context information associated with the target entity, wherein the context information associated with the target entity comprises one or more of:
information indicating a level of battery power of the target entity;
information indicating a signal strength of communications received from the target entity;
information comprising the service schedule of the target entity;
information indicating a level of congestion of the communications network; or
information indicating a fault condition associated with connectivity of the target entity to the communications network.

5. The apparatus recited in claim 4, wherein determining to trigger management of the flow of service layer messages to the target entity comprises:
comparing the collected context information to one or more conditions; and
determining to trigger management of the flow of service layer messages to the target entity when the one or more conditions are met.

6. The apparatus recited in claim 5, wherein the one or more conditions comprise one or more of:
the level of battery power of the target entity has met a threshold value;
the signal strength of communications received from the target entity has met a threshold value;
the service schedule of the target entity indicates that the target entity is unavailable on the communications network;
the level of congestion of the communications network has met a threshold value; or
the information indicating the fault condition associated with connectivity of the target entity to the communications network has been received.

7. The apparatus recited in claim 1, wherein the executable instructions further cause the service layer entity to perform operations comprising:
receiving, from the target entity, a request to trigger management of the flow of service layer messages to the target entity; and
managing, based on the received request and other information of the policy, the flow of service layer messages to the target entity.

8. The apparatus recited in claim 1, wherein the service layer entity supports service capabilities through a set of Application Programming Interfaces, APIs.

9. The apparatus recited in claim 8, wherein functions of the service layer entity are defined according to ETSI/oneM2M standards.

10. A method performed by a service layer entity of a communications network (12), comprising:
storing, in a memory (44, 46) of the service layer entity, information comprising a policy associated with a target entity, the policy comprising information specifying at least one condition for triggering management of a flow of service layer messages to the target entity;
collecting a service schedule of the target entity from metadata that is published to the service layer and is associated with the target entity;
determining, based on the service schedule, to trigger management of the flow of service layer messages to the target entity; and
managing, based on the trigger determination and other information of the policy, the flow of service layer messages to the target entity.

11. The method recited in claim 10, further comprising:
sending, based on the trigger determination, to one or more other service layer entities located remotely on the communications network, a message requesting the one or more other service layer entities to participate in managing the flow of service layer messages to the target entity.

12. The method recited in claim 10, wherein managing the flow of service layer messages to the target entity comprises one or more of:
disabling one or more subscriptions of the target entity to resources hosted on the service layer entity and one or more other service layer entities located remotely on the communications network;
disabling one or more announced resources of the target entity hosted on the service layer entity and one or more other service layer entities located remotely on the communications network;
filtering results of one or more discover requests to remove results pointing to one or more resources of the target entity;
removing the target entity from one or more group resources; or
adjusting a rate of sending or forwarding of service layer messages to the target entity.

13. The method recited in claim 10, wherein the method further comprises:
collecting context information associated with the target entity, wherein the context information associated with the target entity comprises one or more of:
information indicating a level of battery power of the target entity;
information indicating a signal strength of communications received from the target entity;
information comprising the service schedule of the target entity;
information indicating a level of congestion of the communications network; or
information indicating a fault condition associated with connectivity of the target entity to the communications network.

14. The method recited in claim 13, wherein determining to trigger management of the flow of service layer messages to the target entity comprises:
comparing the collected context information to one or more conditions; and
determining to trigger management of the flow of service layer messages to the target entity when the one or more conditions are met.

15. A computer-readable storage medium having stored thereon computer-executable instructions which, when executed by at least one processor (32) of an apparatus (30), implement a service layer entity of a communications network (12) and cause the service layer entity to perform operations comprising:
storing, in a memory (44, 46) of the apparatus, information comprising a policy associated with a target entity, the policy comprising information specifying at least one condition for triggering management of a flow of service layer messages to the target entity;
collecting a service schedule of the target entity from metadata that is published to the service layer and is associated with the target entity;
determining, based on the service schedule, to trigger management of the flow of service layer messages to the target entity; and
managing, based on the trigger determination and other information of the policy, the flow of service layer messages to the target entity.

## Patentansprüche

1. Vorrichtung (30), umfassend mindestens einen Prozessor (32) und Speicher (44, 46), wobei der Speicher ausführbare Anweisungen speichert, die, wenn sie durch den mindestens einen Prozessor ausgeführt werden, eine Dienstschichtentität eines Kommunikationsnetzwerks (12) implementieren und die Dienstschichtentität veranlassen, Operationen durchzuführen, umfassend:
Speichern, in dem Speicher, von Informationen, umfassend eine mit einer Zielentität assoziierte Richtlinie, die Richtlinie umfassend Informationen, die mindestens eine Bedingung zum Auslösen von Verwaltung eines Flusses von Dienstschichtnachrichten an die Zielentität spezifizieren;
Erfassen eines Dienstzeitplans der Zielentität aus Metadaten, die für die Dienstschicht veröffentlicht werden und mit der Zielentität assoziiert sind;
Bestimmen, basierend auf dem Dienstzeitplan, die Verwaltung des Flusses von Dienstschichtnachrichten an die Zielentität auszulösen; und
Verwalten, basierend auf der Auslösungsbestimmung und anderen Informationen der Richtlinie, des Flusses von Dienstschichtnachrichten an die Zielentität.

2. Vorrichtung nach Anspruch 1, wobei die ausführbaren Anweisungen ferner die Dienstschichtentität veranlassen, Operationen durchzuführen, umfassend:
Senden, basierend auf der Auslösungsbestimmung, an eine oder mehrere andere Dienstschichtentitäten, die entfernt in dem Kommunikationsnetzwerk angeordnet sind, einer Nachricht, die die eine oder mehreren anderen Dienstschichtentitäten auffordert, beim Verwalten des Flusses von Dienstschichtnachrichten an die Zielentität teilzunehmen.

3. Vorrichtung nach Anspruch 1, wobei das Verwalten des Flusses von Dienstschichtnachrichten an die Zielentität eines oder mehrere von Folgendem umfasst:
Deaktivieren eines oder mehrerer Abonnements der Zielentität für Betriebsmittel, die in der Dienstschichtentität und einer oder mehreren anderen Dienstschichtentitäten, die entfernt in dem Kommunikationsnetzwerk angeordnet sind, gehostet werden;
Deaktivieren einer oder mehreren angekündigter Betriebsmittel der Zielentität, die in der Dienstschichtentität und einer oder mehreren anderen Dienstschichtentitäten, die entfernt in dem Kommunikationsnetzwerk angeordnet sind, gehostet werden;
Filtern von Ergebnissen einer oder mehrerer Entdeckungsanforderungen, um Ergebnisse zu entfernen, die auf ein oder mehrere Betriebsmittel der Zielentität weisen;
Entfernen der Zielentität aus einem oder mehreren Gruppenbetriebsmitteln; oder
Anpassen einer Rate des Sendens oder Weiterleitens von Dienstschichtnachrichten an die Zielentität.

4. Vorrichtung nach Anspruch 1, wobei die ausführbaren Anweisungen ferner die Dienstschichtentität veranlassen, Operationen durchzuführen, umfassend:
Erfassen von Kontextinformationen, die mit der Zielentität assoziiert sind, wobei die Kontextinformationen, die mit der Zielentität assoziiert sind, eines oder mehrere von Folgendem umfassen:
Informationen, die ein Niveau von Batterieleistung der Zielidentität angeben;
Informationen, die eine Signalstärke von Kommunikationen, die von der Zielidentität empfangen werden, angeben;
Informationen, die den Dienstzeitplan der Zielentität umfassen;
Informationen, die ein Niveau der Belastung des Kommunikationsnetzwerks angeben; oder
Informationen, die eine Fehlerbedingung, die mit Konnektivität der Zielidentität zu dem Kommunikationsnetzwerk assoziiert ist, angeben.

5. Vorrichtung nach Anspruch 4, wobei das Bestimmen, die Verwaltung des Flusses von Dienstschichtnachrichten an die Zielentität auszulösen, umfasst:
Vergleichen der erfassten Kontextinformationen mit einer oder mehreren Bedingungen; und
Bestimmen, die Verwaltung des Flusses von Dienstschichtnachrichten an die Zielentität auszulösen, wenn die eine oder mehreren Bedingungen erfüllt werden.

6. Vorrichtung nach Anspruch 5, wobei die eine oder mehreren Bedingungen eines oder mehrere von Folgendem umfassen:
das Niveau der Batterieleistung der Zielentität hat einen Schwellenwert erfüllt;
die Signalstärke von Kommunikationen, die von der Zielidentität empfangen werden, hat einen Schwellenwert erfüllt;
der Dienstzeitplan der Zielentität gibt an, dass die Zielentität in dem Kommunikationsnetzwerk nicht verfügbar ist;
das Niveau der Belastung des Kommunikationsnetzwerks hat einen Schwellenwert erfüllt; oder
die Informationen, die die Fehlerbedingung, die mit Konnektivität der Zielentität zu dem Kommunikationsnetzwerk assoziiert ist, angeben, wurden empfangen.

7. Vorrichtung nach Anspruch 1, wobei die ausführbaren Anweisungen ferner die Dienstschichtentität veranlassen, Operationen durchzuführen, umfassend:
Empfangen, von der Zielentität, einer Anforderung, die Verwaltung des Flusses von Dienstschichtnachrichten an die Zielentität auszulösen; und
Verwalten, basierend auf der empfangenen Anforderung und anderen Informationen der Richtlinie, des Flusses von Dienstschichtnachrichten an die Zielentität.

8. Vorrichtung nach Anspruch 1, wobei die Dienstschichtentität Dienstkapazitäten durch einen Satz von Anwendungsprogrammierungsschnittstellen, APIs, unterstützt.

9. Vorrichtung nach Anspruch 8, wobei Funktionen der Dienstschichtentität gemäß ETSI/oneM2M-Standards definiert sind.

10. Verfahren, durchgeführt durch eine Dienstschichtentität eines Kommunikationsnetzwerks (12), umfassend:
Speichern, in einem Speicher (44, 46) der Dienstschichtentität, von Informationen, umfassend eine mit einer Zielentität assoziierte Richtlinie, die Richtlinie umfassend Informationen, die mindestens eine Bedingung zum Auslösen von Verwaltung eines Flusses von Dienstschichtnachrichten an die Zielentität spezifizieren;
Erfassen eines Dienstzeitplans der Zielentität aus Metadaten, die für die Dienstschicht veröffentlicht werden und mit der Zielentität assoziiert sind;
Bestimmen, basierend auf dem Dienstzeitplan, die Verwaltung des Flusses von Dienstschichtnachrichten an die Zielentität auszulösen; und
Verwalten, basierend auf der Auslösungsbestimmung und anderen Informationen der Richtlinie, des Flusses von Dienstschichtnachrichten an die Zielentität.

11. Verfahren nach Anspruch 10, ferner umfassend:
Senden, basierend auf der Auslösungsbestimmung, an eine oder mehrere andere Dienstschichtentitäten, die entfernt in dem Kommunikationsnetzwerk angeordnet sind, einer Nachricht, die die eine oder mehreren anderen Dienstschichtentitäten anfordert, beim Verwalten des Flusses von Dienstschichtnachrichten an die Zielentität teilzunehmen.

12. Verfahren nach Anspruch 10, wobei Verwalten des Flusses von Dienstschichtnachrichten an die Zielentität eines oder mehrere von Folgendem umfasst:
Deaktivieren eines oder mehrerer Abonnements der Zielentität für Betriebsmittel, die in der Dienstschichtentität und einer oder mehreren anderen Dienstschichtentitäten, die entfernt in dem Kommunikationsnetzwerk angeordnet sind, gehostet werden;
Deaktivieren einer oder mehrerer angekündigter Betriebsmittel der Zielentität, die in der Dienstschichtentität und einer oder mehreren anderen Dienstschichtentitäten, die entfernt in dem Kommunikationsnetzwerk angeordnet sind, gehostet werden;
Filtern von Ergebnissen einer oder mehrerer Entdeckungsanforderungen, um Ergebnisse zu entfernen, die auf ein oder mehrere Betriebsmittel der Zielentität weisen;
Entfernen der Zielentität aus einem oder mehreren Gruppenbetriebsmitteln; oder
Anpassen einer Rate des Sendens oder Weiterleitens von Dienstschichtnachrichten an die Zielentität.

13. Verfahren nach Anspruch 10, wobei das Verfahren ferner umfasst:
Erfassen von Kontextinformationen, die mit der Zielentität assoziiert sind, wobei die Kontextinformationen, die mit der Zielentität assoziiert sind, eines oder mehrere von Folgendem umfassen:
Informationen, die ein Niveau von Batterieleistung der Zielidentität angeben;
Informationen, die eine Signalstärke von Kommunikationen, die von der Zielidentität empfangen werden, angeben;
Informationen, die den Dienstzeitplan der Zielentität umfassen;
Informationen, die ein Niveau der Belastung des Kommunikationsnetzwerks angeben; oder
Informationen, die eine Fehlerbedingung, die mit Konnektivität der Zielidentität zu dem Kommunikationsnetzwerk assoziiert ist, angeben.

14. Verfahren nach Anspruch 13, wobei das Bestimmen, die Verwaltung des Flusses von Dienstschichtnachrichten an die Zielentität auszulösen, umfasst:
Vergleichen der erfassten Kontextinformationen mit einer oder mehreren Bedingungen; und
Bestimmen, die Verwaltung des Flusses von Dienstschichtnachrichten an die Zielentität auszulösen, wenn die eine oder mehreren Bedingungen erfüllt werden.

15. Computerlesbares Speichermedium mit darin gespeicherten computerausführbaren Anweisungen, die, wenn sie durch mindestens einen Prozessor (32) einer Vorrichtung (30) ausgeführt werden,
eine Dienstschichtentität eines Kommunikationsnetzwerks (12) implementieren und die Dienstschichtentität veranlassen, Operationen durchzuführen, umfassend:
Speichern, in einem Speicher (44, 46) der Vorrichtung, von Informationen, umfassend eine mit einer Zielentität assoziierte Richtlinie, die Richtlinie umfassend Informationen, die mindestens eine Bedingung zum Auslösen von Verwaltung eines Flusses von Dienstschichtnachrichten an die Zielentität spezifizieren;
Erfassen eines Dienstzeitplans der Zielentität aus Metadaten, die für die Dienstschicht veröffentlicht werden und mit der Zielentität assoziiert sind;
Bestimmen, basierend auf dem Dienstzeitplan, die Verwaltung des Flusses von Dienstschichtnachrichten an die Zielentität auszulösen; und
Verwalten, basierend auf der Auslösungsbestimmung und anderen Informationen der Richtlinie, des Flusses von Dienstschichtnachrichten an die Zielentität.

## Revendications

1. Appareil (30) comprenant au moins un processeur (32) et une mémoire (44, 46), la mémoire stockant des instructions exécutables qui, lorsqu'elles sont exécutées par l'au moins un processeur, mettent en oeuvre une entité de couche de services d'un réseau de communications (12) et amènent l'entité de couche de services à réaliser des opérations comprenant :
le stockage, dans la mémoire, d'informations comprenant une politique associée à une entité cible, la politique comprenant des informations stipulant au moins une condition de déclenchement de la gestion d'un flux de messages de couche de services vers l'entité cible ;
la collecte d'une planification de services de l'entité cible à partir de métadonnées publiées vers la couche de services et associées à l'entité cible ;
la détermination, sur la base de la planification de services, de déclencher la gestion du flux de messages de couche de services vers l'entité cible ; et
la gestion, sur la base de la détermination de déclencher et d'autres informations de la politique, du flux de messages de couche de services vers l'entité cible.

2. Appareil selon la revendication 1, les instructions exécutables amenant en outre l'entité de couche de services à réaliser des opérations comprenant :
la transmission, sur la base de la détermination de déclencher, à une ou plusieurs autres entités de couche de services situées à distance sur le réseau de communications, d'un message demandant aux une ou plusieurs autres entités de couche de services de prendre part à la gestion du flux de messages de couche de services vers l'entité cible.

3. Appareil selon la revendication 1, la gestion du flux de messages de couche de services vers l'entité cible comprenant :
la désactivation d'un ou de plusieurs abonnements de l'entité cible à des ressources hébergées sur l'entité de couche de services et une ou plusieurs autres entités de couche de services situées à distance sur le réseau de communications ; et/ou
la désactivation d'une ou de plusieurs ressources annoncées de l'entité cible hébergées sur l'entité de couche de services et une ou plusieurs autres entités de couche de services situées à distance sur le réseau de communications ; et/ou
le filtrage de résultats d'une ou de plusieurs demandes de découverte pour supprimer des résultats pointant vers une ou plusieurs ressources de l'entité cible ; et/ou
la suppression de l'entité cible d'une ou de plusieurs ressources de groupe ; et/ou
l'ajustement d'un débit de transmission ou de retransmission de messages de couche de services vers l'entité cible.

4. Appareil selon la revendication 1, les instructions exécutables amenant en outre l'entité de couche de services à réaliser des opérations comprenant :
la collecte d'informations contextuelles associées à l'entité cible, les informations contextuelles associées à l'entité cible comprenant :
des informations indiquant un niveau d'énergie de batterie de l'entité cible ; et/ou
des informations indiquant une intensité de signal de communications reçues depuis l'entité cible ; et/ou
des informations comprenant la planification de services de l'entité cible ; et/ou
des informations indiquant un niveau de congestion du réseau de communications ; et/ou
des informations indiquant un état de défaut associé à la connectivité de l'entité cible au réseau de communications.

5. Appareil selon la revendication 4, la détermination de déclencher la gestion du flux de messages de couche de services vers l'entité cible comprenant :
la comparaison des informations contextuelles collectées à une ou plusieurs conditions ; et
la détermination de déclencher la gestion du flux de messages de couche de services vers l'entité cible lorsque les une ou plusieurs conditions sont remplies.

6. Appareil selon la revendication 5, les une ou plusieurs conditions comprenant :
le niveau d'énergie de batterie de l'entité cible a atteint une valeur-seuil ; et/ou
l'intensité de signal de communications reçues depuis l'entité cible a atteint une valeur-seuil ; et/ou
la planification de services de l'entité cible indique que l'entité cible est indisponible sur le réseau de communications ; et/ou
le niveau de congestion du réseau de communications a atteint une valeur-seuil ; et/ou
les informations indiquant l'état de défaut associé à la connectivité de l'entité cible au réseau de communications ont été reçues.

7. Appareil selon la revendication 1, les instructions exécutables amenant en outre l'entité de couche de services à réaliser des opérations comprenant :
la réception, depuis l'entité cible, d'une demande de déclenchement de la gestion du flux de messages de couche de services vers l'entité cible ; et
la gestion, sur la base de la demande reçue et d'autres informations de la politique, du flux de messages de couche de services vers l'entité cible.

8. Appareil selon la revendication 1, l'entité de couche de services prenant en charge des capacités de services via un ensemble d'interfaces de programmation d'application, notées API.

9. Appareil selon la revendication 8, des fonctions de l'entité de couche de services étant définies selon les normes ETSI/oneM2M.

10. Procédé réalisé par une entité de couche de services d'un réseau de communications (12), comprenant :
le stockage, dans une mémoire (44, 46) de l'entité de couche de services, d'informations comprenant une politique associée à une entité cible, la politique comprenant des informations stipulant au moins une condition de déclenchement de la gestion d'un flux de messages de couche de services vers l'entité cible ;
la collecte d'une planification de services de l'entité cible à partir de métadonnées publiées vers la couche de services et associées à l'entité cible ;
la détermination, sur la base de la planification de services, de déclencher la gestion du flux de messages de couche de services vers l'entité cible ; et
la gestion, sur la base de la détermination de déclencher et d'autres informations de la politique, du flux de messages de couche de services vers l'entité cible.

11. Procédé selon la revendication 10, comprenant en outre :
la transmission, sur la base de la détermination de déclencher, à une ou plusieurs autres entités de couche de services situées à distance sur le réseau de communications, d'un message demandant aux une ou plusieurs autres entités de couche de services de prendre part à la gestion du flux de messages de couche de services vers l'entité cible.

12. Procédé selon la revendication 10, la gestion du flux de messages de couche de services vers l'entité cible comprenant :
la désactivation d'un ou de plusieurs abonnements de l'entité cible à des ressources hébergées sur l'entité de couche de services et une ou plusieurs autres entités de couche de services situées à distance sur le réseau de communications ; et/ou
la désactivation d'une ou de plusieurs ressources annoncées de l'entité cible hébergées sur l'entité de couche de services et une ou plusieurs autres entités de couche de services situées à distance sur le réseau de communications ; et/ou
le filtrage de résultats d'une ou de plusieurs demandes de découverte pour supprimer des résultats pointant vers une ou plusieurs ressources de l'entité cible ; et/ou
la suppression de l'entité cible d'une ou de plusieurs ressources de groupe ; et/ou
l'ajustement d'un débit de transmission ou de retransmission de messages de couche de services vers l'entité cible.

13. Procédé selon la revendication 10, le procédé comprenant en outre :
la collecte d'informations contextuelles associées à l'entité cible, les informations contextuelles associées à l'entité cible comprenant :
des informations indiquant un niveau d'énergie de batterie de l'entité cible ; et/ou
des informations indiquant une intensité de signal de communications reçues depuis l'entité cible ; et/ou
des informations comprenant la planification de services de l'entité cible ; et/ou
des informations indiquant un niveau de congestion du réseau de communications ; et/ou
des informations indiquant un état de défaut associé à la connectivité de l'entité cible au réseau de communications.

14. Procédé selon la revendication 13, la détermination de déclencher la gestion du flux de messages de couche de services vers l'entité cible comprenant :
la comparaison des informations contextuelles collectées à une ou plusieurs conditions ; et
la détermination de déclencher la gestion du flux de messages de couche de services vers l'entité cible lorsque les une ou plusieurs conditions sont remplies.

15. Support de stockage lisible par ordinateur sur lequel sont stockées des instructions lisibles par ordinateur qui, lorsqu'elles sont exécutées par au moins un processeur (32) d'un appareil (30), mettent en oeuvre une entité de couche de services d'un réseau de communications (12) et amènent l'entité de couche de services à réaliser des opérations comprenant :
le stockage, dans une mémoire (44, 46) de l'appareil, d'informations comprenant une politique associée à une entité cible, la politique comprenant des informations stipulant au moins une condition de déclenchement de la gestion d'un flux de messages de couche de services vers l'entité cible ;
la collecte d'une planification de services de l'entité cible à partir de métadonnées publiées vers la couche de services et associées à l'entité cible ;
la détermination, sur la base de la planification de services, de déclencher la gestion du flux de messages de couche de services vers l'entité cible ; et
la gestion, sur la base de la détermination de déclencher et d'autres informations de la politique, du flux de messages de couche de services vers l'entité cible.
